(19) Europäisches Patentamt
European Patent Office
Office européen des brevets

(11) **EP 3 470 479 A1**

# EUROPEAN PATENT APPLICATION
published in accordance with Art. 153(4) EPC

(43) Date of publication:
**17.04.2019 Bulletin 2019/16**

(21) Application number: **17810432.9**

(22) Date of filing: **09.06.2017**

(51) Int Cl.:
*C09D 17/00* (2006.01)　　*C09C 3/10* (2006.01)
*C09D 11/322* (2014.01)

(86) International application number:
**PCT/JP2017/021509**

(87) International publication number:
**WO 2017/213260 (14.12.2017 Gazette 2017/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.06.2016 JP 2016115629**

(71) Applicant: **Kao Corporation**
**Chuo-Ku**
**Tokyo 103-8210 (JP)**

(72) Inventors:
• **MATSUMOTO, Yuta**
**Wakayama-shi**
**Wakayama 640-8580 (JP)**
• **KURODA, Azusa**
**Wakayama-shi**
**Wakayama 640-8580 (JP)**

(74) Representative: **Hoffmann Eitle**
**Patent- und Rechtsanwälte PartmbB**
**Arabellastraße 30**
**81925 München (DE)**

(54) **PROCESS FOR PRODUCING DISPERSION OF FINE COLORED PARTICLES**

(57)　　The present invention relates to [1] a process for producing a colored fine particle dispersion by subjecting a raw material monomer containing a crosslinkable monomer to emulsion polymerization in the presence of a pigment in which an amount of the crosslinkable monomer compounded in the raw material monomer is from 0.1 to 10% by mass, said process including the step 1 of mixing and emulsifying the raw material monomer with a surfactant A and water to obtain a pre-emulsion; and the step 2 of conducting the emulsion polymerization while supplying the pre-emulsion obtained in the step 1 to a pigment pre-dispersion containing the pigment and water to thereby obtain the colored fine particle dispersion, and [2] a process for producing a water-based ink, including the step of mixing the colored fine particle dispersion that is produced by the process according to the aforementioned [1], and an organic solvent.

EP 3 470 479 A1

**Description**

FIELD OF THE INVENTION

The present invention relates to a process for producing a colored fine particle dispersion, and a process for producing a water-based ink containing the colored fine particle dispersion.

BACKGROUND OF THE INVENTION

In ink-jet printing methods, droplets of ink are directly projected onto a printing medium from very fine nozzles and allowed to adhere to the printing medium to obtain printed materials on which characters or images are printed. The ink-jet printing methods have become rapidly spread because of various advantages such as easiness of full coloration, low cost, capability of using a plain paper as the printing medium, non-contact with printed characters or images, etc. In recent years, in order to impart good weathering resistance and water resistance to the printed materials, an ink containing a pigment as a colorant has been extensively used.

On the other hand, it has been required to print characters or images on a printing medium for commercial printing purposes using a low-liquid absorbing coated paper such as an offset-coated paper or a non-liquid absorbing resin film such as a polyvinyl chloride resin film, a polypropylene resin film and a polyester resin film.

It is known that when characters or images are printed on the low-liquid absorbing or non-liquid absorbing printing media by the ink-jet printing methods, there tend to occur problems such as prolonged drying time owing to slow or no absorption of liquid components, and deterioration in rub fastness early after printing. Also, it is known that unlike a plain paper in which a pigment is easily penetrated, the low-liquid absorbing or non-liquid absorbing printing media tend to suffer from deposition of pigment particles remaining thereon which are directly susceptible to an external force, so that the characters or images printed on these printing media tend to be deteriorated in rub fastness even after being dried.

In order to improve rub fastness of the printed characters or images after being dried, there are known technologies for incorporating rein particles having a film-forming capability into a water-based ink.

For example, JP 2015-48466A (Patent Literature 1) discloses a process for producing a water-based ink for ink-jet printing which is excellent in storage stability as well as rub fastness and solvent resistance when printed on a low-water absorbing printing medium, said process including the steps of subjecting a monomer mixture containing (meth)acrylic acid and a (meth)acrylic acid ester in a total amount of not less than 90% by mass to emulsion polymerization to obtain an emulsion A containing acrylic acid-based copolymer particles having a weight-average molecular weight of not less than 100,000; adding and dispersing a pigment in the emulsion A to obtain a pigment dispersion; subjecting a monomer mixture containing (meth)acrylic acid and a (meth)acrylic acid ester in a total amount of not less than 90% by mass to emulsion polymerization to obtain an emulsion B containing acrylic acid-based copolymer particles having a weight-average molecular weight of not less than 100,000; and mixing the pigment dispersion, the emulsion B and an organic solvent with each other to obtain the water-based ink.

In addition, JP 2002-347338A (Patent Literature 2) discloses an ink-jet printing method including the step of allowing an ink composition containing a colorant formed by incorporating a coloring material in a polymer containing an anionic group and having a crosslinked structure, a water-soluble organic solvent and water and an ink composition containing a colorant formed by incorporating a coloring material in a polymer containing a cationic group and having a crosslinked structure, a water-soluble organic solvent and water, which serve as an ink composition capable of providing an ink that is excellent dispersion stability and rub fastness, etc., to contact with each other on a printing medium to form a flocculated material. In addition, in Examples (for example, in the paragraph [0145]) of JP 2002-347338A, it is described that an emulsion prepared by mixing a raw material monomer such as benzyl methacrylate, a polymerizable surfactant, water, etc., is added dropwise to a dispersion prepared by adding and dispersing a pigment and a polymerizable surfactant in water, and after completion of the dropwise addition, the resulting dispersion is subjected to polymerization reaction.

Furthermore, JP 2005-97476A (Patent Literature 3) discloses a process for producing a microencapsulated pigment that is capable of producing an ink for ink-jet printing which is excellent in dispersion stability and rub fastness, etc., said process including the steps of adding and mixing a cationic polymerizable surfactant in an aqueous dispersion of pigment particles containing an anionic group on a surface thereof; adding an anionic polymerizable surfactant or a hydrophilic monomer containing an anionic group to the resulting mixture to obtain an emulsion; and then adding a polymerization initiator to the resulting emulsion to subject the emulsion to emulsion polymerization. In addition, in Examples (for example, in the paragraph [0195]) of JP 2005-97476A, it is described that after mixing the cationic polymerizable surfactant in the aqueous dispersion prepared by dispersing the pigment containing an anionic group on a surface thereof in water and then mixing a raw material monomer such as benzyl methacrylate in the resulting dispersion, and further mixing the anionic polymerizable surfactant and the hydrophilic monomer in the dispersion, the obtained mixture was charged into a reaction vessel and heated therein, and then a polymerization initiator aqueous solution was added dropwise to the reaction vessel to subject the contents of the reaction vessel to polymerization reaction.

SUMMARY OF THE INVENTION

The present invention relates to a process for producing a colored fine particle dispersion by subjecting a raw material monomer containing a crosslinkable monomer to emulsion polymerization in the presence of a pigment in which an amount of the crosslinkable monomer compounded in the raw material monomer is not less than 0.1% by mass and not more than 10% by mass, said process including the following steps 1 and 2:

Step 1: mixing and emulsifying the raw material monomer with a surfactant A and water to obtain a pre-emulsion; and
Step 2: while supplying the pre-emulsion obtained in the step 1 to a pigment pre-dispersion containing the pigment and water, subjecting the resulting mixture to emulsion polymerization to thereby obtain the colored fine particle dispersion.

DETAILED DESCRIPTION OF THE INVENTION

Incidentally, in order to promote wet-spreadability of an ink on a non-liquid absorbing printing medium formed of a polyester resin, a polyvinyl chloride resin, etc., it is necessary to add a low-polarity solvent such as an ether to the ink. However, since the low-polarity solvent tends to cause deterioration in storage stability of the ink, it has been demanded to further improve storage stability of a colored fine particle dispersion to be compounded in the ink.
However, in the technologies of the aforementioned Patent Literatures 1 to 3, the resulting dispersions tend to be insufficient in storage stability and also tend to exhibit poor rub fastness when printed on a low-water absorbing printing medium.
The present invention relates to a process for producing a colored fine particle dispersion that has excellent storage stability when used in a water-based ink, and is also excellent in rub fastness even when the ink is printed on a low-water absorbing printing medium, and a process for producing a water-based ink containing the colored fine particle dispersion.
Meanwhile, the term "printing" as used in the present specification is a concept that includes printing or typing operation for printing characters or images, and the term "printed material" as used in the present specification is a concept that includes printed matters or typed materials on which characters or images are printed. In addition, the term "low-water absorbing" printing medium as used in the present specification is a concept that includes both of a low-liquid absorbing printing medium and a non-liquid absorbing printing medium, and means a printing medium having a water absorption of not less than 0 g/m$^2$ and not more than 10 g/m$^2$ as measured under the condition that a contact time between the printing medium and pure water is 100 milliseconds.
The present inventors have found that by subjecting a raw material monomer containing a specific amount of a crosslinkable monomer to emulsion polymerization in the presence of a pigment according to a specific process, it is possible to produce a colored fine particle dispersion that has excellent storage stability when used in a water-based ink, and is also excellent in rub fastness when the ink is printed on a low-water absorbing printing medium.
That is, the present invention relates to the following aspects [1] and [2].

[1] A process for producing a colored fine particle dispersion by subjecting a raw material monomer containing a crosslinkable monomer to emulsion polymerization in the presence of a pigment in which an amount of the crosslinkable monomer compounded in the raw material monomer is not less than 0.1% by mass and not more than 10% by mass, said process including the following steps 1 and 2:

Step 1: mixing and emulsifying the raw material monomer with a surfactant A and water to obtain a pre-emulsion; and
Step 2: while supplying the pre-emulsion obtained in the step 1 to a pigment pre-dispersion containing the pigment and water, subjecting the resulting mixture to emulsion polymerization to thereby obtain the colored fine particle dispersion.

[2] A process for producing a water-based ink, including the step of mixing the colored fine particle dispersion that is produced by the process according to the aforementioned aspect [1], and an organic solvent.

In accordance with the present invention, there are provided a process for producing a colored fine particle dispersion that has excellent storage stability when used in a water-based ink, and is excellent in rub fastness even when the ink is printed on a low-water absorbing printing medium, as well as a process for producing a water-based ink containing the colored fine particle dispersion.

[Process for Producing Colored Fine Particle Dispersion]

The present invention relates to a process for producing a colored fine particle dispersion by subjecting a raw material monomer containing a crosslinkable monomer to emulsion polymerization in the presence of a pigment in which an amount of the crosslinkable monomer compounded in the raw material monomer is not less than 0.1% by mass and not more than 10% by mass, said process including the following steps 1 and 2:

Step 1: mixing and emulsifying the raw material monomer with a surfactant A and water to obtain a pre-emulsion; and
Step 2: while supplying the pre-emulsion obtained in the step 1 to a pigment pre-dispersion containing the pigment and water, subjecting the resulting mixture to emulsion polymerization to thereby obtain the colored fine particle dispersion.

The colored fine particle dispersion according to the present invention is in the form of a dispersion prepared by dispersing colored fine particles in a dispersing medium containing water as a main medium, and may be used in a water-based ink, for example, may be used in a water-based ink for flexographic printing, gravure printing or ink-jet printing. In particular, the colored fine particle dispersion according to the present invention is excellent in storage stability and can be inhibited from suffering from formation of flocculated deposits in nozzles, and therefore can be preferably used in a water-based ink for ink-jet printing.

Meanwhile, the "colored fine particles" as used in the present invention mean the particles obtained by coating particles of a pigment with an at least partially crosslinked polymer, i.e., a polymer having a crosslinked moiety (hereinafter also referred to merely as a "crosslinked polymer"), and the pigment may include an achromatic pigment such as a white pigment, a black pigment and a gray pigment. The "emulsion polymerization" as used in the present invention means a method of emulsifying or dispersing a raw material monomer containing a crosslinkable monomer in a dispersing medium containing water as a main component in the presence of a surfactant, and subjecting the resulting emulsion or dispersion to polymerization using a polymerization initiator. In the aforementioned method, by subjecting the raw material monomer containing the crosslinkable monomer to emulsion polymerization in the presence of the pigment, it is possible to obtain the particles formed by coating the respective particles of the pigment with the crosslinked polymer.

The "coating" as used in the present invention means such a condition in which the surface of the respective pigment particles may be at least partially coated with the crosslinked polymer, or may be wholly coated with the polymer.

The configuration of the colored fine particles in the colored fine particle dispersion is preferably such a configuration in which at least a part of the surface of the respective pigment particles is coated with the crosslinked polymer to form composite particles. Examples of the configuration of the colored fine particles in the colored fine particle dispersion include the particle configuration in which the pigment is enclosed or encapsulated within the respective crosslinked polymer particles, the particle configuration in which the pigment is uniformly dispersed in the respective crosslinked polymer particles, the particle configuration in which the pigment is exposed onto a surface of the respective crosslinked polymer particles, and the like.

The colored fine particle dispersion according to the present invention can exhibit such a remarkable effect that when the colored fine particle dispersion is used in a water-based ink, the resulting ink has excellent storage stability, and is also excellent in rub fastness when printed on a low-water absorbing printing medium (hereinafter also referred to merely as "rub fastness"). The reason why the aforementioned advantageous effect can be attained by the present invention is considered as follows though it is not clearly determined yet.

That is, since the colored fine particles are produced by subjecting the raw material monomer containing the crosslinkable monomer to emulsion polymerization in the presence of the pigment, the obtained colored fine particles are in the form of particles formed by coating the pigment particles with the crosslinked polymer. As a result, it is considered that the colored fine particles are inhibited from suffering from swelling in the ink, so that the resulting ink can exhibit high storage stability.

However, if the amount of the crosslinkable monomer compounded in the raw material monomer is excessively increased, the hardness of the crosslinked polymer in the obtained colored fine particles becomes high, so that the resulting ink tends to have poor film-forming properties and therefore tends to be deteriorated in rub fastness. For this reason, it is necessary to adjust the degree of crosslinking of the crosslinked polymer by controlling the amount of the crosslinkable monomer compounded.

In the present invention, it is considered that by controlling the amount of the crosslinkable monomer compounded in the raw material monomer to the specific range, it is possible to improve storage stability of the resulting ink without deterioration in rub fastness thereof.

Furthermore, it is considered that by conducting the emulsion polymerization while supplying the pre-emulsion containing the crosslinkable monomer to the pigment-containing dispersion, the pigment is enclosed or encapsulated in the crosslinked polymer while being kept in a uniformly dispersed state therein, so that it is possible to achieve both of good storage stability and good film-forming properties of the ink at a high level, and allow the ink to exhibit excellent rub fastness.

(Pigment)

The pigment used in the present invention may be either an inorganic pigment or an organic pigment.

Examples of the inorganic pigment include carbon blacks and metal oxides. In particular, carbon blacks are preferably used for black inks. The carbon blacks may include furnace blacks, thermal lamp blacks, acetylene blacks and channel blacks.

Examples of the organic pigment include azo pigments, diazo pigments, phthalocyanine pigments, quinacridone pigments, isoindolinone pigments, dioxazine pigments, perylene pigments, perinone pigments, thioindigo pigments, anthraquinone pigments and quinophthalone pigments.

The hue of the pigments used in the present invention is not particularly limited, and there may be used any of achromatic pigments; and chromatic pigments such as a yellow pigment, a magenta pigment, a cyan pigment, a red pigment, a blue pigment, an orange pigment, a green pigment, etc.

The pigment used in the present invention is preferably a pigment subjected to no hydrophilic treatment from the viewpoint of improving storage stability and rub fastness of the resulting ink. Meanwhile, the "hydrophilic treatment" of the pigment as used herein means the treatment in which at least one anionic or cationic hydrophilic functional group is bonded onto the surface of the pigment either directly or through the other atom group. Examples of the other atom group used above include an alkanediyl group having not less than 1 and not more than 24 carbon atoms, a substituted or unsubstituted phenylene group and a substituted or unsubstituted naphthylene group. Examples of the anionic hydrophilic functional group include acid groups such as a carboxy group ($-COOM^1$), a sulfonic acid group ($-SO_3M^1$), a phosphoric acid group ($-OPO_3M^1_2$), and dissociated ion forms of these groups (such as $-COO^-$, $-SO_3^-$, $-OPO_3^{2-}$ and $-OPO_3^-M^1$), wherein $M^1$ is a hydrogen atom, an alkali metal, ammonium or organic ammonium. Examples of the cationic hydrophilic functional group include an ammonium group, an amino group, etc.

(Raw Material Monomer)

The raw material monomer used in the present invention contains at least one polymerizable group in a molecule thereof, and includes a crosslinkable monomer. Meanwhile, the term "raw material monomer" as used in the present invention is intended to mean the monomer excluding a polymerizable surfactant. However, in the case where the polymerizable surfactant is used in the below-mentioned emulsion polymerization, the polymerizable surfactant may be incorporated into the resulting crosslinked polymer by copolymerizing the raw material monomer therewith.

The crosslinkable monomer preferably contains at least two polymerizable groups, more preferably at least three polymerizable groups and even more preferably three polymerizable groups in a molecule thereof.

The polymerizable group is a group containing a radical-polymerizable unsaturated double bond. Examples of the polymerizable group include at least one group selected from the group consisting of a vinyl group, an allyl group, an acryloyl group, a methacryloyl group, a propenyl group, a vinylidene group and a vinylene group. Among these polymerizable groups contained in the crosslinkable monomer, preferred is at least one group selected from the group consisting of an acryloyl group and a methacryloyl group.

Examples of the crosslinkable monomer include (meth)acrylates derived from a polyhydric alcohol, such as ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, dipropylene glycol di(meth)acrylate, tripropylene glycol di(meth)acrylate, tetrapropylene glycol di(meth)acrylate, polypropylene glycol di(meth)acrylate, 1,2-butanediol di(meth)acrylate, 1,3-butanediol di(meth)acrylate, 1,4-butanediol di(meth)acrylate, 1,6-hexanediol di(meth)acrylate, pentaerythritol di(meth)acrylate, neopentyl glycol di(meth)acrylate, glycerin di(meth)acrylate, glycerin tri(meth)acrylate, trimethylolpropane tri(meth)acrylate, ditrimethylolpropane tetra(meth)acrylate, pentaerythritol tri(meth)acrylate and pentaerythritol tetra(meth)acrylate; acrylamide compounds such as *N*-methyl-*N*-allyl acrylamide, *N,N*-diallyl acrylamide, N-vinyl acrylamide, *N,N'*-methylenebis(meth)acrylamide and *N,N'*-ethylenebis(meth)acrylamide; divinyl compounds such as divinyl benzene, divinyl ether and divinyl ethylene urea; and polyallyl compounds such as diallyl phthalate, diallyl maleate, diallylamine, triallylamine, triallyl ammonium salts, allyl etherified compounds of pentaerythritol and allyl etherified compounds containing two or more allyl ether units in a molecule thereof.

Among these crosslinkable monomers, preferred is a (meth)acrylate derived from a polyhydric alcohol, more preferred is at least one monomer selected from the group consisting of a di(meth)acrylate and a tri(meth)acrylate which are derived from a polyhydric alcohol, even more preferred is at least one monomer selected from the group consisting of diethylene glycol di(meth)acrylate, triethylene glycol di(meth)acrylate and trimethylolpropane tri(meth)acrylate, further even more preferred is at least one monomer selected from the group consisting of diethylene glycol di(meth)acrylate and trimethylolpropane tri(meth)acrylate, and still further even more preferred is trimethylolpropane tri(meth)acrylate.

Meanwhile, the term "(meth)acrylate" as used in the present specification means at least one compound selected from the group consisting of an acrylate and a methacrylate, and is hereinafter defined in the same way.

The amount of the crosslinkable monomer compounded in the raw material monomer is not less than 0.1% by mass, preferably not less than 0.3% by mass, more preferably not less than 0.5% by mass and even more preferably not less than 0.7% by mass from the viewpoint of improving storage stability of the resulting ink, and is also not more than 10% by mass, preferably not more than 7.0% by mass, more preferably not more than 5.0% by mass, even more preferably not more than 3.0% by mass and further even more preferably not more than 2.0% by mass from the viewpoint of improving rub fastness of the resulting ink.

In the case where the crosslinkable monomer contains two polymerizable groups in a molecule thereof, the amount of the crosslinkable monomer compounded in the raw material monomer is not less than 0.1% by mass, preferably not less than 0.5% by mass, more preferably not less than 1.0% by mass, even more preferably not less than 2.0% by mass and further even more preferably not less than 4.0% by mass from the viewpoint of improving storage stability of the resulting ink, and is also not more than 10% by mass, preferably not more than 8.0% by mass and more preferably not more than 6.0% by mass from the viewpoint of improving rub fastness of the resulting ink.

In the case where the crosslinkable monomer contains three or more polymerizable groups in a molecule thereof, preferably in the case where the crosslinkable monomer contains three polymerizable groups in a molecule thereof, the amount of the crosslinkable monomer compounded in the raw material monomer is not less than 0.1% by mass, preferably not less than 0.3% by mass, more preferably not less than 0.5% by mass and even more preferably not less than 0.7% by mass from the viewpoint of improving storage stability of the resulting ink, and is also not more than 10% by mass, preferably not more than 7.0% by mass, more preferably not more than 5.0% by mass, even more preferably not more than 3.0% by mass and further even more preferably not more than 2.0% by mass from the viewpoint of improving rub fastness of the resulting ink.

The raw material monomer preferably further contains an acid group-containing monomer. When introducing a structure derived from the acid group-containing monomer into the crosslinked polymer, the obtained colored fine particles can be inhibited from suffering from flocculation therebetween owing to charge repulsion of the acid group, so that the resulting ink can be improved in storage stability.

The acid group-containing monomer is a monomer containing at least an acid group and a polymerizable group in a structure thereof. The solubility in water of the acid group-containing monomer as measured by dissolving the monomer in 100 g of ion-exchanged water at 25°C is preferably more than 5 g, and more preferably not less than 10 g from the viewpoint of improving dispersion stability of the pigment water dispersion, more specifically, dispersion stability of the colored fine particle dispersion, as well as from the viewpoint of improving storage stability of the resulting ink.

Examples of the acid group include groups capable of exhibiting an acidity by releasing hydrogen ions therefrom upon dissociation thereof, such as a carboxy group ($-COOM^2$), a sulfonic acid group ($-SO_3M^2$), a phosphoric acid group ($-OPO_3M^2_2$), and dissociated ion forms of these groups (such as $-COO^-$, $-SO_3^-$, $-OPO_3^{2-}$ and $-OPO_3^-M^2$) wherein $M^2$ is a hydrogen atom, an alkali metal, ammonium or organic ammonium.

Examples of the polymerizable group include those mentioned above.

Examples of the acid group-containing monomer include at least one monomer selected from the group consisting of (meth)acrylic acid, maleic acid, itaconic acid, fumaric acid, crotonic acid, styrenesulfonic acid, 2-acrylamido-2-methylpropanesulfonic acid, 3-sulfopropyl (meth)acrylate, vinylphosphonic acid and vinyl phosphate.

From the viewpoint of improving storage stability and rub fastness of the resulting ink, the acid group in these acid group-containing monomers is preferably a carboxy group. The carboxy group-containing monomer is preferably at least one monomer selected from the group consisting of (meth)acrylic acid, maleic acid, itaconic acid, fumaric acid and crotonic acid, and more preferably (meth)acrylic acid. The term "(meth)acrylic acid" as used herein means at least one monomer selected from the group consisting of acrylic acid and methacrylic acid, and is hereinafter defined in the same way.

The amount of the acid group-containing monomer compounded in the raw material monomer is preferably not less than 1.0% by mass, more preferably not less than 3.0% by mass and even more preferably not less than 4.0% by mass from the viewpoint of improving storage stability and rub fastness of the resulting ink, and is also preferably not more than 20% by mass, more preferably not more than 15% by mass, even more preferably not more than 10% by mass and further even more preferably not more than 6.0% by mass from the same viewpoint as described above.

The raw material monomer used in the present invention preferably further contains a hydrophobic monomer from the viewpoint of improving dispersion stability of the colored fine particle dispersion.

The term "hydrophobic" of the hydrophobic monomer as used in the present invention means that the amount of the monomer which can be dissolved in 100 g of ion-exchanged water as measured at 25°C is less than 10 g. The solubility in water of the hydrophobic monomer as measured by dissolving the monomer in 100 g of ion-exchanged water at 25°C is preferably not more than 5 g, and more preferably not more than 1 g from the viewpoint of improving adsorptivity of the crosslinked polymer to the surface of the pigment.

As the hydrophobic monomer, there may be mentioned those monomers containing at least a hydrophobic group and a polymerizable group in their structure.

Examples of the hydrophobic group include at least one group selected from the group consisting of an aliphatic hydrocarbon group, an alicyclic hydrocarbon group and an aromatic hydrocarbon group. Examples of the polymerizable group include those mentioned above.

The hydrophobic monomer is preferably at least one monomer selected from the group consisting of a (meth)acrylate containing a hydrocarbon group derived from an aliphatic alcohol and an aromatic ring-containing hydrophobic monomer.

As the (meth)acrylate containing a hydrocarbon group derived from an aliphatic alcohol, preferred are those (meth)acrylates containing a hydrocarbon group derived from an aliphatic alcohol having not less than 1 and not more than 10 carbon atoms, more preferred are those (meth)acrylates containing an alkyl group having not less than 1 and not more than 10 carbon atoms, and even more preferred are those (meth)acrylates containing an alkyl group having not less than 1 and not more than 8 carbon atoms. Examples of the (meth)acrylate containing a hydrocarbon group derived from an aliphatic alcohol include (meth)acrylates containing a linear alkyl group, such as methyl (meth)acrylate, ethyl (meth)acrylate, propyl (meth)acrylate, butyl (meth)acrylate, pentyl (meth)acrylate, octyl (meth)acrylate, decyl (meth)acrylate, dodecyl (meth)acrylate and stearyl (meth)acrylate; (meth)acrylates containing a branched alkyl group, such as isopropyl (meth)acrylate, isobutyl (meth)acrylate, *tert*-butyl (meth)acrylate, isopentyl (meth)acrylate, isooctyl (meth)acrylate, isodecyl (meth)acrylate, isododecyl (meth)acrylate, isostearyl (meth)acrylate and 2-ethylhexyl (meth)acrylate; and (meth)acrylates containing an alicyclic alkyl group, such as cyclohexyl (meth)acrylate.

Among these (meth)acrylates, from the viewpoint of improving dispersion stability of the colored fine particle dispersion, preferred is at least one compound selected from the group consisting of methyl (meth)acrylate, ethyl (meth)acrylate and 2-ethylhexyl (meth)acrylate, more preferred is at least one compound selected from the group consisting of methyl (meth)acrylate and 2-ethylhexyl (meth)acrylate, and even more preferred is a combination of methyl (meth)acrylate and 2-ethylhexyl (meth)acrylate.

The aromatic ring-containing hydrophobic monomer is preferably a vinyl monomer containing an aromatic group having not less than 6 and not more than 22 carbon atoms which may contain a substituent group having a hetero atom, and more preferably at least one monomer selected from the group consisting of a styrene-based monomer and an aromatic group-containing (meth)acrylate.

Examples of the styrene-based monomer include styrene and 2-methyl styrene. Examples of the aromatic group-containing (meth)acrylate include benzyl (meth)acrylate and phenoxyethyl (meth)acrylate. Among these aromatic ring-containing hydrophobic monomers, preferred is at least one monomer selected from the group consisting of styrene and benzyl (meth)acrylate, and more preferred is benzyl (meth)acrylate.

The amount of the hydrophobic monomer compounded in the raw material monomer is preferably not less than 80% by mass, more preferably not less than 85% by mass and even more preferably not less than 90% by mass from the viewpoint of improving dispersion stability of the colored fine particle dispersion, and is also preferably not more than 99% by mass, more preferably not more than 97% by mass and even more preferably not more than 95% by mass from the viewpoint of improving storage stability and rub fastness of the resulting ink.

The raw material monomer may further contain a monomer containing a polyalkylene glycol chain. Examples of the monomer containing a polyalkylene glycol chain include polyalkylene glycol (meth)acrylates such as polyethylene glycol (n = 2 to 30 in which n represents an average molar number of addition of an alkyleneoxide; hereinafter defined in the same way) mono(meth)acrylate; and alkoxy polyalkylene glycol (meth)acrylates such as methoxy polyethylene glycol (n = 1 to 30) mono(meth)acrylate, octoxy polyethylene glycol (n = 1 to 30) mono(meth)acrylate and stearoxy polyethylene glycol (n = 1 to 30) mono(meth)acrylate.

Specific examples of the commercially available products of these monomers include "NK ESTER M-90G", "NK ESTER M-230G", "NK ESTER M-450G" and "NK ESTER M-900G" all available from Shin-Nakamura Chemical Co., Ltd., and "LIGHT ESTER 041MA" available from Kyoeisha Chemical Co., Ltd.

<Step 1: Step of Producing Pre-Emulsion>

The step 1 is the step of mixing and emulsifying the raw material monomer with a surfactant A and water to obtain a pre-emulsion.

In the step 1, the surfactant A is added from the viewpoint of facilitating emulsification of the raw material monomer.

The surfactant A has a function of emulsifying the raw material monomer and stably supplying the raw material monomer to a pigment pre-dispersion.

The surfactant A is preferably at least one surfactant selected from the group consisting of an anionic surfactant and a nonionic surfactant from the viewpoint of stably emulsifying the raw material monomer, and any suitable emulsifier for emulsion polymerization may be used as the surfactant A.

Examples of the preferred anionic surfactant include at least one compound selected from the group consisting of fatty acid salts, alkylbenzenesulfonic acid salts, polyoxyethylene alkylphenylethersulfuric acid ester salts, polyoxyethylene aralkylarylethersulfuric acid ester salts and polyoxyethylene alkylethersulfuric acid ester salts. Of these anionic surfactants, preferred are polyoxyethylene alkylethersulfuric acid ester salts. Examples of the commercially available products of the anionic surfactant include "LATEMUL" and "EMAL" both available from Kao Corporation, etc.

Examples of the nonionic surfactant include at least one compound selected from the group consisting of polyoxyethylene alkyl phenyl ethers, polyoxyethylene aralkyl aryl ethers and polyoxyethylene alkyl ethers. Examples of the commercially available products of the nonionic surfactant include "NOIGEN" available from DKS Co., Ltd., "EMULGEN" available from Kao Corporation, etc.

As the surfactant A, a polymerizable surfactant may be used. The polymerizable surfactant as used herein means those surfactants referred to as a reactive surfactant that can be copolymerized with a monomer having an unsaturated double bond, and is an anionic or nonionic polymerizable surfactant (emulsifier) having at least one radical-polymerizable unsaturated double bond in a molecule thereof. The polymerizable surfactant can be incorporated into the crosslinked polymer by copolymerizing the raw material monomer therewith, whereby it is possible to produce a colored fine particle dispersion that is excellent in dispersion stability.

In the step 1, as the surfactant A, the aforementioned polymerizable surfactant may be used in combination with the other surfactant. The proportion of the aforementioned polymerizable surfactant on the basis of a whole amount of the surfactant A (a total amount of the polymerizable surfactant and the other surfactant) is preferably not more than 50% by mass, more preferably not more than 30% by mass, even more preferably not more than 10% by mass, further even more preferably not more than 5% by mass and still further even more preferably 0% by mass from the viewpoint of stably emulsifying the raw material monomer.

The amount of the surfactant A used in the step 1 is preferably not less than 0.05 part by mass, more preferably not less than 0.1 part by mass, even more preferably not less than 0.5 part by mass and further even more preferably not less than 1.0 part by mass on the basis of 100 parts by mass of the raw material monomer from the viewpoint of improving storage stability and rub fastness of the resulting ink, and is also preferably not more than 15 parts by mass, more preferably not more than 10 parts by mass and even more preferably not more than 5.0 parts by mass on the basis of 100 parts by mass of the raw material monomer from the same viewpoint as described above.

From the viewpoint of suppressing formation of coarse particles, the mixing and emulsifying operation may be conducted using a rotary stirring device. In this case, the rotating speed of the rotary stirring device is preferably controlled to not less than 200 rpm and more preferably not less than 300 rpm. From the same viewpoint as described above, the rotating speed of the rotary stirring device is also preferably controlled to not more than 5,000 rpm, more preferably not more than 2,000 rpm and even more preferably not more than 1,000 rpm. The stirring time is preferably not less than 10 minutes, and is also preferably not more than 60 minutes.

<Step 2: Emulsion Polymerization Step>

The step 2 is the step in which while supplying the pre-emulsion obtained in the step 1 to a pigment pre-dispersion containing the pigment and water, the resulting mixture is subjected to emulsion polymerization to thereby obtain the colored fine particle dispersion. In other words, the step 2 is the step of supplying the pre-emulsion to the pigment pre-dispersion under the condition in which the emulsion polymerization is initiated and allowed to proceed at the time at which the pre-emulsion is supplied to the pigment pre-dispersion. The condition in which the emulsion polymerization is initiated and allowed to proceed can be determined by the polymerization temperature and the presence of a polymerization initiator, etc.

In the pigment pre-dispersion used in the step 2, the particles of the pigment are dispersed in a dispersing medium containing water as a main component. While supplying the pre-emulsion constituted of the raw material monomer containing the crosslinkable monomer to such a pigment pre-dispersion, the polymerizable group contained in the raw material monomer is polymerized in the presence of a polymerization initiator to thereby subject the crosslinkable monomer contained in the raw material monomer to crosslinking reaction. As a result, it is possible to produce the colored fine particle dispersion containing the particles of the pigment which are coated with the crosslinked polymer.

[Step 2-1: Pigment Dispersing Step]

From the viewpoint of improving dispersion stability of the colored fine particle dispersion, the pigment pre-dispersion preferably contains a surfactant B. The pigment pre-dispersion is preferably obtained by the following step 2-1 using the surfactant B:
Step 2-1: dispersing a mixed solution containing the pigment, the surfactant B and water to obtain the pigment pre-dispersion.

By conducting the step 2-1, it is possible to fully atomize the pigment, and uniformly disperse the particles of the pigment in the dispersion when coating the surface of the pigment with the crosslinked polymer in the emulsion polymerization of the step 2.

As the surfactant B, there may be used a polymerizable surfactant and the other surfactant. Examples of the other surfactant include the same anionic surfactant and nonionic surfactant as described in the aforementioned surfactant A, and any suitable emulsifier for emulsion polymerization may be used as the surfactant B. In addition, the surfactant A and the surfactant B may be either the same or different from each other.

The surfactant B preferably contains a polymerizable surfactant from the viewpoint of improving storage stability and rub fastness of the resulting ink.

Examples of the polymerizable surfactant include sulfosuccinic acid ester-based surfactants, alkylphenolether-based polymerizable group-containing surfactants and polyoxyethylene-based polymerizable group-containing surfactants. Of these polymerizable surfactants, preferred is at least one surfactant selected from the group consisting of sulfosuccinic acid ester-based surfactants, alkylphenolether-based polymerizable group-containing surfactants and polyoxyethylene-based polymerizable group-containing surfactants.

In the step 2-1, as the surfactant B, the aforementioned polymerizable surfactant may be used in combination with the other surfactant. The proportion of the aforementioned polymerizable surfactant on the basis of a whole amount of the surfactant B (a total amount of the polymerizable surfactant and the other surfactant) is preferably not less than 5% by mass, more preferably not less than 20% by mass, even more preferably not less than 40% by mass, further even more preferably not less than 60% by mass and still further even more preferably not less than 80% by mass, and is also not more than 100% by mass.

Specific examples of the commercially available products of the polymerizable surfactant include "ADEKA REASOAP" available from ADEKA Corporation, "AQUALON" available from DSK Co., Ltd., "ELEMINOL JS" and "ELEMINOL RS" both available from Sanyo Chemical Industries Ltd., and "LATEMUL PD" available from Kao Corporation.

The amount of the surfactant B used in the step 2-1 is preferably not less than 1.0 part by mass, more preferably not less than 5.0 parts by mass and even more preferably not less than 8.0 parts by mass, and is also preferably not more than 50 parts by mass, more preferably not more than 30 parts by mass, even more preferably not more than 20 parts by mass and further even more preferably not more than 15 parts by mass, on the basis of 100 parts by mass of the pigment. When the amount of the surfactant B used in the step 2-1 is not less than 1.0 part by mass, the pigment can exhibit excellent dispersibility, and it is therefore possible to obtain the uniform pigment pre-dispersion containing pigment particles having a small particle size. When the amount of the surfactant B used in the step 2-1 is not more than 50 parts by mass, it is possible to prevent formation of particles that are constituted of the crosslinked polymer solely on which no pigment is adsorbed, and suppress increase in viscosity of the resulting ink in association with increased concentration of the ink upon evaporation of water from the ink system, which tends to cause ejection defects, etc.

The dispersing medium used in the step 2-1 is water, and from the viewpoint of rendering the pigment easily wettable with the dispersing medium to fully atomize the pigment, it is preferred that the aforementioned mixed solution preferably further contains an organic solvent B.

Examples of the organic solvent B include at least one compound selected from the group consisting of alcohols and ketones having not less than 1 and not more than 6 carbon atoms, as well as ethers, amides, aromatic hydrocarbons and aliphatic hydrocarbons having not less than 5 and not more than 10 carbon atoms. Of these organic solvents, preferred are oxygen atom-containing polar solvents having not less than 1 and not more than 5 carbon atoms, more preferred is at least one compound selected from the group consisting of alcohols having not less than 1 and not more than 5 carbon atoms and ketones having not less than 1 and not more than 5 carbon atoms, and even more preferred are ketones having not less than 1 and not more than 5 carbon atoms. Specific examples of the organic solvent B include at least one compound selected from the group consisting of methanol, ethanol, acetone and methyl ethyl ketone. Of these organic solvents, from the viewpoint of rendering the pigment easily wettable with the dispersing medium to fully atomize the pigment, methyl ethyl ketone is preferably used.

The amount of water used in the step 2-1 is preferably not less than 100 parts by mass, more preferably not less than 150 parts by mass and even more preferably not less than 200 parts by mass on the basis of 100 parts by mass of the pigment from the viewpoint of uniformly dispersing the pigment in water, and is also preferably not more than 500 parts by mass, more preferably not more than 400 parts by mass and even more preferably not more than 300 parts by mass on the basis of 100 parts by mass of the pigment from the same viewpoint as described above.

The ratio between amounts of water and the organic solvent B used in the step 2-1 is not particularly limited. The mass ratio of the organic solvent B to water (organic solvent B/water) in the mixed solution is preferably not less than 0.05, more preferably not less than 0.08, even more preferably not less than 0.10 and further even more preferably not less than 0.15 from the viewpoint of improving storage stability and rub fastness of the resulting ink, and is also preferably not more than 0.30, more preferably not more than 0.25 and even more preferably not more than 0.20 from the same viewpoint as described above.

As a mixing disperser used in the dispersion treatment for obtaining the pigment pre-dispersion, there may be used various conventionally known dispersers. Examples of the dispersers include high-speed stirring mixers such as dispers and homomixers, kneading machines such as roll mills, kneaders and extruders, high-pressure dispersers such as high-pressure homogenizers, media-type dispersers such as paint shakers and beads mills, and mixing and stirring devices such as anchor blades. These dispersers may also be used in combination of any two or more thereof.

Of these dispersers, from the viewpoint of uniformly dispersing the pigment in water, high-speed stirring mixers such as dispers and homomixers and media-type dispersers such as paint shakers and beads mills are preferably used. Examples of the commercially available high-speed stirring mixers include "Ultra Disper" available from Asada Iron Works Co., Ltd., and "ROBOMICS" available from PRIMIX Corporation. Examples of the commercially available media-type dispersers include "Ultra Apex Mill" available from Kotobuki Industries Co., Ltd., and "Pico Mill" available from Asada Iron Works Co., Ltd.

When using the media-type dispersers, the material of dispersing media used in the dispersion treatment is preferably a ceramic material such as zirconia and titania, a polymer material such as polyethylene and nylon, a metal, etc. Of these materials, from the viewpoint of good abrasion resistance of the dispersing media, zirconia is more preferred. In addition, from the viewpoint of fully atomizing the pigment, the diameter of the dispersing media is preferably not less than 0.003 mm and more preferably not less than 0.01 mm, and is also preferably not more than 0.5 mm and more preferably not more than 0.4 mm.

The dispersing time is preferably not less than 0.3 hour and more preferably not less than 1 hour from the viewpoint of fully atomizing the pigment, and is also preferably not more than 200 hours and more preferably not more than 50 hours from the viewpoint of enhancing production efficiency of the pigment pre-dispersion.

From the viewpoint of atomizing and dispersing the pigment, the dispersion treatment in the step 2-1 preferably includes a high-pressure dispersion treatment. More specifically, it is preferred that after subjecting the mixed solution containing the pigment, the polymerizable surfactant and water, and optionally containing the organic solvent B, if required, to dispersion treatment, the resulting dispersion is further subjected to high-pressure dispersion treatment to obtain the pigment pre-dispersion, and it is more preferred that after subjecting the mixed solution to dispersion treatment using a high-speed stirring mixer or a media-type disperser, the resulting dispersion is further subjected to the high-pressure dispersion treatment to obtain the pigment pre-dispersion.

The term "high-pressure dispersion" as used herein means that the dispersion treatment is conducted under a pressure of not less than 20 MPa. The dispersing pressure is preferably not less than 50 MPa, more preferably not less than 100 MPa and even more preferably not less than 130 MPa from the viewpoint of well wetting the surface of the pigment with the surfactant to uniformly disperse the pigment in the resulting dispersion. Also, from the viewpoint of attaining good operability of the disperser used in the dispersion treatment, the dispersing pressure is preferably not more than 250 MPa and more preferably not more than 200 MPa.

The number of passes through the disperser upon subjecting the dispersion to the high-pressure dispersion treatment is preferably not less than 2, more preferably not less than 3, even more preferably not less than 5, further even more preferably not less than 7 and still further even more preferably not less than 9 from the viewpoint of well wetting the surface of the pigment with the surfactant to uniformly disperse the pigment in the resulting dispersion. Also, from the viewpoint of attaining good dispersion treatment efficiency, the number of passes through the disperser upon subjecting the dispersion to the high-pressure dispersion treatment is not more than 20. The operation method of the disperser upon the high-pressure dispersion treatment may be either a circulating method or a continuous method. Among these operation methods, from the viewpoint of suppressing occurrence of distribution of the dispersion condition owing to the number of passes through the disperser, preferred is a continuous method.

As the high-pressure dispersers used in the present invention, there may be mentioned homo-valve-type high-pressure homogenizers such as typically "High-Pressure Homogenizer" (tradename) available from Izumi Food Machinery Co., Ltd., and chamber-type high-pressure homogenizers such as "MICROFLUIDIZER" (tradename) available from Microfluidics Corporation, "Nanomizer" (tradename) available from Yoshida Kikai Kogyo Co., Ltd., and "Ultimizer" and ""Starburst" (tradenames) both available from Sugino Machine Ltd. Of these dispersers, preferred are chamber-type high-pressure homogenizers such as "MICROFLUIDIZER" (tradename), "Nanomizer" (tradename), and "Ultimizer" and ""Starburst" (tradenames).

The temperature of the dispersion upon the high-pressure dispersion treatment is not particularly limited, and is preferably not lower than 5°C and not higher than 80°C.

In the case of adding the organic solvent B to the dispersing medium in the step 2-1, it is preferred that the organic solvent B is removed after the dispersion treatment, preferably after the high-pressure dispersion treatment. When removing the organic solvent B after the dispersion treatment, the crosslinked polymer produced by the emulsion polymerization in the step 2 can be prevented from being coalesced together, so that it becomes possible to obtain a colored fine particle dispersion in which the colored fine particles having a small particle size are dispersed.

Examples of the preferred apparatus used for removing the organic solvent B include at least one apparatus selected from the group consisting of a thin film distillation apparatus such as a batch simple distillation device, a reduced pressure distillation device and a flush evaporator, a rotary distillation device and a stirring evaporator. Among these apparatuses, from the viewpoint of efficiently removing the organic solvent B from the dispersion, preferred is at least one apparatus selected from the group consisting of a rotary distillation device and a stirring evaporator. In the case where the organic solvent B is removed at one time from the dispersion treatment product that is obtained in an amount as small as not more than 5 kg, the rotary distillation device is preferably used, whereas in the case where the organic solvent B is removed at one time from the dispersion treatment product that is obtained in an amount as large as more than 5 kg, the stirring evaporator is preferably used. Among the rotary distillation devices, more preferred is a rotary reduced-pressure distillation device such as a rotary evaporator, and among the stirring evaporators, more preferred is a stirring tank thin film evaporator.

The temperature of the dispersion upon removing the organic solvent B therefrom may be appropriately selected according to the kind of organic solvent to be removed. The temperature of the dispersion upon removing the organic solvent B therefrom under reduced pressure is preferably not lower than 20°C, more preferably not lower than 25°C and even more preferably not lower than 30°C, and is also preferably not higher than 80°C, more preferably not higher than 70°C and even more preferably not higher than 65°C.

The pressure used upon removal of the organic solvent B is preferably not less than 0.01 MPa, more preferably not less than 0.02 MPa and even more preferably not less than 0.05 MPa from the viewpoint of efficiently removing the organic solvent B from the dispersion, and is also preferably not more than 0.5 MPa, more preferably not more than 0.2 MPa and even more preferably not more than 0.1 MPa from the same viewpoint as described above.

The time required for removal of the organic solvent B is preferably not less than 1 hour, more preferably not less than 2 hours and even more preferably not less than 5 hours, and is also preferably not more than 24 hours, more preferably not more than 12 hours and even more preferably not more than 10 hours.

The removal of the organic solvent B is preferably conducted until the solid content of the pigment pre-dispersion reaches preferably not less than 18% by mass, more preferably not less than 20% by mass and even more preferably not less than 25% by mass, and also preferably not more than 60% by mass, more preferably not more than 40% by mass and even more preferably not more than 35% by mass.

(Pigment Pre-Dispersion)

The content of the pigment in the pigment pre-dispersion is preferably not less than 5.0% by mass, more preferably not less than 10% by mass, even more preferably not less than 15% by mass and further even more preferably not less than 20% by mass from the viewpoint of attaining good coloring properties of the resulting ink, and is also preferably not more than 40% by mass, more preferably not more than 35% by mass and even more preferably not more than 30% by mass from the viewpoint of maintaining good dispersion stability of the pigment in the pigment pre-dispersion.

In the case where the pigment pre-dispersion contains the surfactant B, the content of the surfactant B in the pigment pre-dispersion is preferably not less than 0.1% by mass, more preferably not less than 0.5% by mass and even more preferably not less than 1.0% by mass from the viewpoint of maintaining good dispersion stability of the pigment in the pigment pre-dispersion, and is also preferably not more than 30% by mass, more preferably not more than 20% by mass, even more preferably not more than 10% by mass and further even more preferably not more than 5.0% by mass form the viewpoint of uniformly coating the particles of the pigment with the polymer in the emulsion polymerization step.

The solid content of the pigment pre-dispersion is preferably not less than 18% by mass, more preferably not less than 20% by mass and even more preferably not less than 25% by mass, and is also preferably not more than 60% by mass, more preferably not more than 40% by mass and even more preferably not more than 35% by mass.

(Emulsion Polymerization)

In the step 2, while supplying the pre-emulsion obtained in the step 1 to the pigment pre-dispersion, the resulting mixture is subjected to emulsion polymerization to thereby obtain the colored fine particle dispersion according to the present invention.

In the emulsion polymerization conducted in the present invention, a polymerization initiator is preferably used therein, and from the viewpoint of fully atomizing the pigment and coating the surface of the pigment with the crosslinked polymer, it is preferred that the polymerization initiator is added in the step 2. Although the polymerization initiator may be added to any of the pigment pre-dispersion and the pre-emulsion, it is more preferred that the polymerization initiator is added to the pigment pre-dispersion.

As the polymerization initiator, there may be used any of ordinary polymerization initiators that may be suitably used for emulsion polymerization processes. Specific examples of the polymerization initiator include persulfates such as potassium persulfate and ammonium persulfate; hydrogen peroxide; organic peroxides such as *t*-butyl hydroperoxide, benzoyl peroxide and cumene hydroperoxide; and azo-based polymerization initiators such as azobisdiisobutyronitrile and 2,2-azobis(2-amidinopropane) dihydrochloride. Of these polymerization initiators, from the viewpoint of reducing inclusion of coarse particles in the resulting colored fine particle dispersion, preferred is a water-soluble polymerization initiator, more preferred is an azo-based polymerization initiator, and even more preferred is an anionic azo-based polymerization initiator.

Examples of the anionic azo-based polymerization initiator include at least one carboxy group-containing azo compound selected from the group consisting of azobiscarboxylic acids having not less than 8 and not more than 16 carbon atoms, such as 1,1'-azobis(cyclohexane-1-carboxylic acid), azobiscyanocarboxylic acids having not less than 8 and not more than 16 carbon atoms, such as 4,4'-azobis(4-cyanovaleric acid), 2,2'-azobis(4-cyanovaleric acid) and 4,4'-azobis(2-cyanopentanoic acid), and salts of these acids. Of these anionic azo-based polymerization initiators, preferred is at least one compound selected from the group consisting of azobiscyanocarboxylic acids having not less than 10 and not more than 14 carbon atoms and salts of these acids, and more preferred is at least one compound selected from the group consisting of 4,4'-azobis(4-cyanovaleric acid) and salts thereof.

In addition, as the polymerization initiator, there may also be used redox-based polymerization initiators using the peroxide in combination with a reducing agent such as sodium sulfite, rongalite and ascorbic acid.

The amount of the polymerization initiator used in the present invention is preferably not less than 0.01 part by mass, more preferably not less than 0.05 part by mass and even more preferably not less than 0.1 part by mass on the basis of 100 parts by mass of the raw material monomer from the viewpoint of improving molecular weight distribution of the resulting crosslinked polymer, and is also preferably not more than 5.0 parts by mass, more preferably not more than 3.0 parts by mass and even more preferably not more than 1.0 part by mass on the basis of 100 parts by mass of the raw material monomer from the viewpoint of improving polymerization stability.

In the emulsion polymerization, a chain transfer agent may also be used. Examples of the chain transfer agent include mercaptans such as *n*-dodecyl mercaptan, *t*-dodecyl mercaptan and *n*-octyl mercaptan; xanthogens such as dimethyl xanthogen disulfide and diisobutyl xanthogen disulfide; and dipentene, indene, 1,4-cyclohexadiene, dihydrofuran and xanthene.

The dispersing medium used in the emulsion polymerization may contain, in addition to water, an organic solvent A as an optional component.

Examples of the organic solvent A include alcohols and ketones having not less than 1 and not more than 6 carbon atoms, as well as ethers, amides, aromatic hydrocarbons and aliphatic hydrocarbons having not less than 5 and not more than 10 carbon atoms.

The ratio between amounts of water and the organic solvent A used in the dispersing medium is not particularly limited. The proportion of water to a whole amount of the dispersing medium is preferably not less than 50% by mass, more preferably not less than 65% by mass, even more preferably not less than 75% by mass and further even more preferably not less than 80% by mass.

As the method of supplying the aforementioned pre-emulsion in the step 2, there may be used a batch addition method, a split-addition method, a continuous addition method or a combination of these methods. Of these methods, from the viewpoint of attaining good polymerization stability, preferred is a continuous addition method.

The conditions of the emulsion polymerization conducted in the present invention are not particularly limited. The amount of the raw material monomer used in the emulsion polymerization is preferably not less than 1.0% by mass, more preferably not less than 10% by mass and even more preferably not less than 15% by mass on the basis of a whole reaction system used in the emulsion polymerization reaction from the viewpoint of improving storage stability and rub fastness of the resulting ink, and is also preferably not more than 60% by mass, more preferably not more than 40% by mass and even more preferably not more than 25% by mass on the basis of a whole reaction system used in the emulsion polymerization reaction from the viewpoint of suppressing increase in viscosity of the resulting ink in association with increased concentration of the ink upon evaporation of water from the ink.

The mass ratio of the raw material monomer to the pigment (raw material monomer/pigment) upon the emulsion polymerization in the step 2 is preferably from 90/10 to 10/90, more preferably from 80/20 to 20/80, even more preferably from 70/30 to 30/70 and further even more preferably from 60/40 to 40/60 from the viewpoint of suppressing increase in viscosity of the resulting ink in association with increased concentration of the ink upon evaporation of water from the ink as well as from the viewpoint of improving storage stability and rub fastness of the resulting ink.

The emulsion polymerization of the step 2 is preferably conducted by multi-stage polymerization and more preferably by two-stage polymerization from the viewpoint of improving storage stability and rub fastness of the resulting ink.

In the case where the emulsion polymerization of the step 2 is conducted by multi-stage polymerization, two or more pre-emulsions having the same composition may be supplied stepwise as the pre-emulsion obtained in the step 1, or two or more kinds of pre-emulsions that are different in composition from each other may be supplied stepwise as the pre-emulsion obtained in the step 1. In the case where the two or more different kinds of pre-emulsions are supplied, at least one of the pre-emulsions contains the crosslinkable monomer.

In the case where the emulsion polymerization of the step 2 is conducted by multi-stage polymerization, the amount of the crosslinkable monomer compounded in the present invention means a total amount of the crosslinkable monomer in a total amount of the raw material monomer contained in the pre-emulsions supplied in the respective multiple stages. Also, the amount of the surfactant A used in the step 1 means a total amount of the surfactant A contained in the pre-emulsions supplied in the respective multiple stages on the basis of 100 parts by mass of the total amount of the raw material monomer.

In the case where the emulsion polymerization of the step 2 is conducted by multi-stage polymerization, from the viewpoint of improving storage stability and rub fastness of the resulting ink, the step 1 preferably includes the step 1a of mixing and emulsifying a raw material monomer (a) with the surfactant A and water to obtain a pre-emulsion (a); and the step 1b of mixing and emulsifying a raw material monomer (b) with the surfactant A and water to obtain a pre-emulsion (b).

In this case, it is preferred that the crosslinkable monomer is contained in at least one of the raw material monomers (a) and (b), and it is more preferred that the content of a mass of the crosslinkable monomer in the raw material monomer (b) is lower than the content of a mass of the crosslinkable monomer in the raw material monomer (a). The content of a mass of the crosslinkable monomer in the raw material monomer (b) on the basis of the content of a mass of the crosslinkable monomer in the raw material monomer (a) is preferably not more than 40% by mass, more preferably not more than 20% by mass, even more preferably not more than 10% by mass and further even more preferably not more than 5% by mass, and it is still furthermore preferred that the raw material monomer (a) contains the crosslinkable monomer, and the raw material monomer (b) contains no crosslinkable monomer.

The order of supply of the pre-emulsions (a) and (b) in the step 2 is not particularly limited. The emulsion polymerization may be conducted while supplying the pre-emulsion (a) in an earlier stage of the step 2, and the emulsion polymerization may be further conducted while supplying the pre-emulsion (b) in a later stage of the step 2. Alternatively, the emulsion polymerization may be conducted while supplying the pre-emulsion (b) in the earlier stage of the step 2, and the emulsion polymerization may be further conducted while supplying the pre-emulsion (a) in the later stage of the step 2. From the viewpoint of maintaining excellent storage stability of the resulting ink and improving rub fastness of the ink, it is preferred that the emulsion polymerization is conducted while supplying the pre-emulsion (a) in the earlier stage of the step 2, and the emulsion polymerization is further conducted while supplying the pre-emulsion (b) in the later stage of the step 2. By conducting the emulsion polymerization in the aforementioned manner, in the earlier stage of the multi-stage polymerization, the emulsion polymerization is allowed to proceed in association with the crosslinking reaction, so that an inner portion of the respective colored fine particles (i.e., an inside of the polymer layer with which the respective pigment particles are encapsulated) is preferentially crosslinked. As a result, it is possible to suppress swelling of the colored fine particles and thereby improve storage stability of the resulting ink. In addition, in the later stage of the multi-stage emulsion polymerization, the emulsion polymerization is preferably allowed to proceed substantially without subjecting an outer shell portion of the respective colored fine particles (i.e., an outside of the polymer layer with which the respective pigment particles are encapsulated) to crosslinking reaction, so that it is possible to improve film-forming properties of the resulting ink and exhibit excellent rub fastness of the ink. From the aforementioned viewpoints, in the case where the emulsion polymerization of the step 2 is conducted by two-stage polymerization, it is preferred that the emulsion polymerization is conducted while supplying the pre-emulsion (a) in the first stage of the two-stage polymerization, and the emulsion polymerization is further conducted while supplying the pre-emulsion (b) in the second stage of the two-stage polymerization to thereby obtain the colored fine particle dispersion.

The amount of the surfactant A contained in the pre-emulsion (a) or (b) is preferably not less than 0.05 part by mass, more preferably not less than 0.1 part by mass, even more preferably not less than 0.5 part by mass and further even more preferably not less than 1.0 part by mass, and is also preferably not more than 15 parts by mass, more preferably not more than 10 parts by mass, even more preferably not more than 8.0 parts by mass, further even more preferably not more than 6.0 parts by mass, still further even more preferably not more than 5.0 parts by mass and still further even more preferably not more than 4.0 parts by mass, on the basis of 100 parts by mass of the raw material monomer (a) or (b).

The mass ratio of the raw material monomer except for the crosslinkable monomer in the pre-emulsion (a) to the raw material monomer except for the crosslinkable monomer in the pre-emulsion (b) [pre-emulsion (a)/pre-emulsion (b)] is preferably from 20/80 to 80/20, more preferably from 30/70 to 70/30 and even more preferably from 40/60 to 60/40.

The temperature of the pigment pre-dispersion upon initiation of supply of the pre-emulsion in the step 2 is preferably not lower than 60°C and more preferably not lower than 70°C, and is also preferably not higher than 100°C and more preferably not higher than 90°C, from the viewpoint of initiating the polymerization simultaneously with supply of the pre-emulsion as well as from the viewpoint of improving storage stability and rub fastness of the resulting ink.

The time required for supplying the pre-emulsion, i.e., the elapsed time from initiation of supply of the pre-emulsion to completion of supply of the pre-emulsion, is preferably not less than 0.5 hour and more preferably not less than 1 hour from the viewpoint of improving uniformity of a particle size of particles contained in the emulsion, and is also preferably not more than 8 hours and more preferably not more than 6 hours from the viewpoint of attaining good reactivity of the emulsion polymerization.

In the case where the emulsion polymerization of the step 2 is conducted by the multi-stage polymerization, the time required for supplying the pre-emulsion in the respective stages is preferably not less than 0.25 hour and more preferably not less than 0.5 hour from the viewpoint of improving uniformity of a particle size of particles contained in the emulsion, and is also preferably not more than 4 hours and more preferably not more than 3 hours from the viewpoint of attaining good reactivity of the emulsion polymerization.

In the case where the emulsion polymerization of the step 2 is conducted by the multi-stage polymerization, the pre-emulsions may be supplied in a continuous and sequential manner in the respective stages, or may be supplied intermittently at the predetermined intervals between the respective stages. However, from the viewpoint of well controlling the reaction system, as well as from the viewpoint of improving conditions of an interface of the layer that is formed from the raw material monomer in the respective stages and from the viewpoint of enhancing productivity thereof, it is preferred that immediately after supplying the preceding pre-emulsion, the succeeding pre-emulsion is supplied to the reaction system.

The polymerization temperature used upon the emulsion polymerization may be appropriately controlled according to a decomposition temperature of the polymerization initiator, and is preferably not lower than 50°C, more preferably not lower than 60°C and even more preferably not lower than 70°C from the viewpoint of improving reactivity of the emulsion polymerization, and is also preferably not higher than 90°C and more preferably not higher than 85°C from the viewpoint of improving the molecular weight distribution of the resulting crosslinked polymer.

The polymerization temperature when using a persulfate as the water-soluble polymerization initiator is preferably not lower than 70°C and more preferably not lower than 75°C from the viewpoint of improving reactivity of the emulsion polymerization, and is also preferably not higher than 85°C and more preferably not higher than 83°C from the viewpoint of improving the molecular weight distribution of the resulting crosslinked polymer.

The polymerization atmosphere is preferably a nitrogen gas atmosphere or an atmosphere of an inert gas such as argon from the viewpoint of improving reactivity of the emulsion polymerization.

After completion of supply of the pre-emulsion in the step 2, the resulting dispersion is preferably aged while maintaining the dispersion at the polymerization temperature. The aging time is preferably not less than 0.5 hour and more preferably not less than 1 hour, and is also preferably not more than 5 hours and more preferably not more than 3 hours. The aging temperature is preferably not lower than 60°C and more preferably not lower than 70°C, and is also preferably not higher than 100°C and more preferably not higher than 90°C.

In the present invention, after completion of supply of the pre-emulsion in the step 2, preferably after aging the resulting dispersion, from the viewpoint of removing coarse particles therefrom, the dispersion is preferably further subjected to centrifugal separation treatment or filtration treatment, and more preferably subjected to both of the centrifugal separation treatment and filtration treatment.

In the case where the centrifugal separation treatment is conducted using a centrifugal separator, it is possible to separate coarse particles from the dispersion, for example, using a high-speed cooling centrifuge "himac CR7" available from Hitachi Koki Co., Ltd., by operating the centrifuge at 3,660 rpm for 20 minutes at 20°C. The centrifugal acceleration upon the centrifugal separation treatment is preferably not less than 500 G and more preferably not less than 1,500 G, and is also preferably not more than 20,000 G, more preferably not more than 15,000 G and even more preferably not more than 10,000 G.

By subjecting the resulting dispersion to the centrifugal separation treatment, the dispersion is separated into a supernatant solution and a precipitate, and further by recovering the supernatant solution therefrom, it is possible to obtain the colored fine particle dispersion.

The filtration treatment is preferably conducted using a filter. The colored fine particle dispersion obtained in the present invention contains fine pigment particles and is excellent in filterability, and therefore is efficiently subjected to the filtration treatment. The pore size of openings of the filter used in the filtration treatment is preferably not more than 10 $\mu$m and more preferably not more than 7.0 $\mu$m from the viewpoint of removing coarse particles from the resulting dispersion, and is also preferably not less than 0.5 $\mu$m, more preferably not less than 1.0 $\mu$m and even more preferably not less than 3.0 $\mu$m from the viewpoint of shortening the time required for the filtration treatment.

(Contents of Respective Components in Colored Fine Particle Dispersion)

The content of the colored fine particles in the colored fine particle dispersion (solid content of the colored fine particle dispersion) is preferably not less than 10% by mass, more preferably not less than 20% by mass and even more preferably not less than 30% by mass form the viewpoint of stably emulsifying and dispersing the colored fine particles, and is also preferably not more than 60% by mass, more preferably not more than 50% by mass and even more preferably not more than 40% by mass form the same viewpoint as described above.

The content of the pigment in the colored fine particle dispersion is preferably not less than 1.0% by mass, more preferably not less than 3.0% by mass, even more preferably not less than 5.0% by mass and further even more preferably not less than 7.0% by mass form the viewpoint of enhancing optical density of the printed characters or images, and is also preferably not more than 40% by mass, more preferably not more than 30% by mass, even more preferably not more than 20% by mass and further even more preferably not more than 15% by mass form the viewpoint of stably emulsifying and dispersing the colored fine particles.

The content of the crosslinked polymer (polymer containing a crosslinked moiety) in the colored fine particle dispersion is preferably not less than 1.0% by mass, more preferably not less than 5.0% by mass, even more preferably not less than 10% by mass, further even more preferably not less than 15% by mass and still further even more preferably not less than 20% by mass form the viewpoint of improving storage stability and rub fastness of the resulting ink, and is also preferably not more than 40% by mass, more preferably not more than 35% by mass, even more preferably not more than 30% by mass and further even more preferably not more than 25% by mass form the same viewpoint as described above.

The mass ratio of the pigment to the crosslinked polymer (polymer containing a crosslinked moiety) [pigment/crosslinked polymer] in the colored fine particle dispersion is preferably not less than 0.1, more preferably not less than 0.2 and even more preferably not less than 0.3 form the viewpoint of enhancing optical density of the printed characters or images as well as form the viewpoint of suppressing increase in viscosity of the resulting ink in association with increased concentration of the ink upon evaporation of water therefrom and improving storage stability and rub fastness of the ink, and is also preferably not more than 4.0, more preferably not more than 3.0, even more preferably not more than 2.0, further even more preferably not more than 1.0 and still further even more preferably not more than 0.7 form the same viewpoint as described above.

(Properties of Colored Fine Particle Dispersion)

The average particle size of the colored fine particles in the colored fine particle dispersion as measured at 25°C is preferably not less than 10 nm, more preferably not less than 30 nm, even more preferably not less than 40 nm, further even more preferably not less than 50 nm, still further even more preferably not less than 60 nm, still further even more preferably not less than 75 nm, still further even more preferably not less than 80 nm and still further even more preferably not less than 100 nm form the viewpoint of suppressing increase in viscosity of the resulting ink in association with increased concentration of the ink upon evaporation of water therefrom and improving storage stability and rub fastness of the ink, and is also preferably not more than 300 nm, more preferably not more than 250 nm, even more preferably not more than 200 nm, further even more preferably not more than 180 nm and still further even more preferably not more than 140 nm from the same viewpoint as described above. Meanwhile, the average particle size of the colored fine particles as measured at 25°C may be measured by the method described in Examples below.

The colored fine particle dispersion of the present invention is preferably used as a colorant for a water-based ink for ink-jet printing form the viewpoint of improving storage stability and rub fastness of the resulting water-based ink.

[Process for Producing Water-Based Ink]

The process for producing the water-based ink according to the present invention (hereinafter also referred to merely as a "water-based ink" or an "ink") preferably includes the step of mixing the colored fine particle dispersion obtained by the aforementioned production process and an organic solvent form the viewpoint of improving storage stability and rub fastness of the resulting water-based ink as well as form the viewpoint of improving wettability of the water-based ink to a low-water absorbing printing medium.

Examples of the organic solvent include at least one compound selected from the group consisting of polyhydric alcohols, polyhydric alcohol alkyl ethers, nitrogen-containing heterocyclic compounds, amides, amines and sulfur-containing compounds.

The organic solvent preferably contains at least one compound selected from the group consisting of polyhydric alcohols and polyhydric alcohol alkyl ethers, more preferably contains polyhydric alcohol alkyl ethers, and even more preferably is a combination of the polyhydric alcohol and the polyhydric alcohol alkyl ether, form the viewpoint of improving storage stability and rub fastness of the resulting water-based ink as well as form the viewpoint of improving wettability of the water-based ink to a low-water absorbing printing medium. The polyhydric alcohols may be used in the form of a mixture containing a plurality of compounds belonging to the concept of polyhydric alcohols, and the polyhydric alcohol alkyl ethers may also be used in the form of a mixture containing a plurality of compounds belonging to the concept of polyhydric alcohol alkyl ethers.

The content of the at least one compound selected from the group consisting of polyhydric alcohols and polyhydric alcohol alkyl ethers in the organic solvent is preferably not less than 80% by mass, more preferably not less than 90% by mass, even more preferably not less than 95% by mass, further even more preferably substantially 100% by mass and still further even more preferably 100% by mass.

The content of the polyhydric alcohol alkyl ethers in the organic solvent is preferably not less than 10% by mass, more preferably not less than 20% by mass and even more preferably not less than 30% by mass, and is also preferably not more than 70% by mass, more preferably not more than 60% by mass and even more preferably not more than 50% by mass.

Examples of the polyhydric alcohols include ethylene glycol, diethylene glycol, triethylene glycol, polyethylene glycol, propylene glycol, dipropylene glycol and tripropylene glycol. Among these polyhydric alcohols, form the viewpoint of improving storage stability and rub fastness of the resulting water-based ink, preferred is propylene glycol.

Examples of the polyhydric alcohol alkyl ethers include ethylene glycol monoethyl ether, ethylene glycol monobutyl ether, diethylene glycol monomethyl ether, diethylene glycol monoethyl ether, diethylene glycol monobutyl ether, diethylene glycol monoisobutyl ether, triethylene glycol monomethyl ether, triethylene glycol monobutyl ether, triethylene glycol monoisobutyl ether, tetraethylene glycol monomethyl ether, propylene glycol monoethyl ether, dipropylene glycol monobutyl ether, dipropylene glycol monomethyl ether, tripropylene glycol monomethyl ether and tripropylene glycol monobutyl ether. Among these polyhydric alcohol alky ethers, form the viewpoint of improving storage stability and rub fastness of the resulting water-based ink as well as form the viewpoint of improving wettability of the water-based ink to a low-water absorbing printing medium, preferred is diethylene glycol monoisobutyl ether.

As the organic solvent, form the viewpoint of improving storage stability of the resulting water-based ink as well as form the viewpoint of improving wettability of the water-based ink to a low-water absorbing printing medium, preferred is a combination of propylene glycol and diethylene glycol monoisobutyl ether.

The water-based ink may also be produced by further adding, in addition to the aforementioned organic solvent, various ordinary additives for inks, such as a wetting agent, a penetrant, a dispersant, a surfactant, a viscosity controller, a defoaming agent, an antiseptic agent, a mildew-proof agent and a rust preventive to the colored fine particle dispersion.

In the present invention, form the viewpoint of improving storage stability of the resulting water-based ink, a neutralizing agent may be compounded in the water-based ink, if required. When compounding the neutralizing agent in the water-based ink, the pH value of the water-based ink is preferably controlled to not less than 7.0 and more preferably not less than 7.5, and is also preferably controlled to not more than 11 and more preferably not more than 9.5.

Examples of the neutralizing agent include hydroxides of alkali metals, ammonia and organic amines.

Specific examples of the hydroxides of alkali metals include lithium hydroxide, sodium hydroxide, potassium hydroxide and cesium hydroxide. Among these hydroxides of alkali metals, preferred is sodium hydroxide.

Specific examples of the organic amines include trimethylamine, ethylamine, diethylamine, triethylamine and triethanolamine.

These neutralizing agents may be used alone or in the form of a mixture of any two or more thereof.

The neutralizing agent is preferably used in the form of an aqueous neutralizing agent solution. From the viewpoint of sufficiently promoting the neutralization, the concentration of the aqueous neutralizing agent solution is preferably not less than 1.0% by mass, more preferably not less than 2.0% by mass and even more preferably not less than 3.0% by mass, and is also preferably not more than 10% by mass, more preferably not more than 7.0% by mass and even more preferably not more than 5.0% by mass.

(Amounts of Respective Components Compounded in Water-Based Ink)

The amount of the colored fine particle dispersion compounded in the water-based ink is preferably not less than 5.0% by mass, more preferably not less than 10% by mass, even more preferably not less than 20% by mass and further even more preferably not less than 25% by mass form the viewpoint of improving storage stability and rub fastness of the resulting water-based ink, and is also preferably not more than 50% by mass, more preferably not more than 40% by mass and even more preferably not more than 30% by mass form the same viewpoint as described above.

The amount of the organic solvent compounded in the water-based ink is preferably not less than 10% by mass, more preferably not less than 20% by mass and even more preferably not less than 30% by mass form the viewpoint of improving storage stability and rub fastness of the resulting water-based ink as well as form the viewpoint of improving wettability of the water-based ink to a low-water absorbing printing medium, and is also preferably not more than 50% by mass, more preferably not more than 45% by mass and even more preferably not more than 40% by mass form the same viewpoint as described above.

When compounding the neutralizing agent in the water-based ink, the amount of the aqueous neutralizing agent solution compounded in the water-based ink is preferably not less than 0.10% by mass, more preferably not less than 0.30% by mass, even more preferably not less than 0.50% by mass and further even more preferably not less than 0.70% by mass form the viewpoint of improving storage stability and rub fastness of the resulting water-based ink, and is also preferably not more than 3.0% by mass, more preferably not more than 2.0% by mass, even more preferably not more than 1.50% by mass and further even more preferably not more than 1.0% by mass form the same viewpoint as described above.

(Contents of Respective Components in Water-Based Ink)

The content of the pigment in the water-based ink is preferably not less than 1.0% by mass, more preferably not less than 1.5% by mass and even more preferably not less than 2.0% by mass from the viewpoint of enhancing optical density of the printed characters or images, and is also preferably not more than 15% by mass, more preferably not more than 10% by mass, even more preferably not more than 8.0% by mass and further even more preferably not more than 5.0% by mass form the viewpoint of improving storage stability and rub fastness of the resulting water-based ink.

The content of the crosslinked polymer (polymer containing a crosslinked moiety) in the water-based ink is preferably not less than 1.0% by mass, more preferably not less than 3.0% by mass and even more preferably not less than 5.0% by mass form the viewpoint of improving storage stability and rub fastness of the resulting water-based ink, and is also preferably not more than 30% by mass, more preferably not more than 20% by mass, even more preferably not more than 10% by mass and further even more preferably not more than 8.0% by mass from the same viewpoint as described above.

The mass ratio of the pigment to the crosslinked polymer (polymer containing a crosslinked moiety) [pigment/crosslinked polymer] in the water-based ink is preferably not less than 0.10, more preferably not less than 0.20 and even more preferably not less than 0.30 from the viewpoint of enhancing optical density of the printed characters or images, and is also preferably not more than 4.0, more preferably not more than 3.0, even more preferably not more than 2.0 and further even more preferably not more than 1.0 form the viewpoint of improving storage stability and rub fastness of the resulting water-based ink.

The content of the organic solvent in the water-based ink is preferably not less than 10% by mass, more preferably not less than 15% by mass, even more preferably not less than 20% by mass, further even more preferably not less than 25% by mass and still further even more preferably not less than 30% by mass form the viewpoint of improving storage stability and rub fastness of the resulting water-based ink as well as form the viewpoint of improving wettability of the water-based ink to a low-water absorbing printing medium, and is also preferably not more than 50% by mass, more preferably not more than 45% by mass and even more preferably not more than 40% by mass from the same viewpoint as described above.

The content of the polyhydric alcohol alky ethers in the water-based ink is preferably not less than 3% by mass, more preferably not less than 5% by mass and even more preferably not less than 10% by mass form the viewpoint of improving storage stability and rub fastness of the resulting water-based ink as well as form the viewpoint of improving wettability of the water-based ink to a low-water absorbing printing medium, and is also preferably not more than 30% by mass, more preferably not more than 25% by mass and even more preferably not more than 20% by mass from the same viewpoint as described above.

The content of the neutralizing agent in the water-based ink is preferably not less than 0.01% by mass, more preferably not less than 0.02% by mass and even more preferably not less than 0.03% by mass form the viewpoint of improving storage stability and rub fastness of the resulting water-based ink, and is also preferably not more than 0.10% by mass, more preferably not more than 0.07% by mass and even more preferably not more than 0.05% by mass from the same viewpoint as described above.

The content of water in the water-based ink is preferably not less than 20% by mass, more preferably not less than 30% by mass and even more preferably not less than 40% by mass form the viewpoint of improving storage stability and rub fastness of the resulting water-based ink, and is also preferably not more than 70% by mass, more preferably not more than 65% by mass and even more preferably not more than 60% by mass from the same viewpoint as described above.

(Properties of Water-Based Ink)

The average particle size of the colored fine particles in the water-based ink as measured at 25°C is preferably not less than 10 nm, more preferably not less than 30 nm, even more preferably not less than 40 nm, further even more preferably not less than 50 nm, still further even more preferably not less than 60 nm, still further even more preferably not less than 75 nm, still further even more preferably not less than 80 nm and still further even more preferably not less than 100 nm form the viewpoint of improving storage stability and rub fastness of the resulting water-based ink, and is also preferably not more than 300 nm, more preferably not more than 250 nm, even more preferably not more than 200 nm, further even more preferably not more than 180 nm and still further even more preferably not more than 140 nm from the same viewpoint as described above. Meanwhile, the average particle size of the colored fine particles in the water-based ink as measured at 25°C may be measured by the method described in Examples below.

The viscosity of the water-based ink as measured at 32°C is preferably not less than 2.0 mPa•s, more preferably not less than 3.0 mPa•s, even more preferably not less than 4.0 mPa•s and further even more preferably not less than 5.0 mPa•s form the viewpoint of improving storage stability and rub fastness of the resulting water-based ink, and is also preferably not more than 12 mPa•s, more preferably not more than 10.0 mPa•s and even more preferably not more than 9.0 mPa•s from the same viewpoint as described above. Meanwhile, the viscosity of the water-based ink as measured at 32°C may be measured by the method described in Examples below.

The static surface tension of the water-based ink as measured at 20°C is preferably not less than 20 mN/m and more preferably not less than 25 mN/m form the viewpoint of improving ejection properties of the resulting water-based ink, and is also preferably not more than 50 mN/m, more preferably not more than 45 mN/m, even more preferably not more than 40 mN/m and further even more preferably not more than 35 mN/m from the same viewpoint as described above. Meanwhile, the static surface tension of the water-based ink as measured at 20°C may be measured by the method described in Examples below.

The pH value of the water-based ink is preferably not less than 6.0, more preferably not less than 7.0, even more preferably not less than 7.5 and further even more preferably not less than 7.8 form the viewpoint of improving storage stability and rub fastness of the resulting water-based ink, and is also preferably not more than 11.0, more preferably not more than 10.0, even more preferably not more than 9.5 and further even more preferably not more than 9.0 from the viewpoint of improving the resistance of members to the water-based ink and suppressing skin irritation. Meanwhile, the pH value of the water-based ink may be measured by the method described in Examples below.

(Ink-Jet Printing Method)

The aforementioned water-based ink may be used in an ink-jet printing method in which characters or images are printed on a printing medium such as a plain paper or an ink-jet paper. In addition, the water-based ink is preferably used in an ink-jet printing method in which characters or images are printed on a low-water absorbing printing medium, because of excellent rub fastness of the water-based ink.

As the method of ejecting the water-based ink in an ink-jet printing apparatus, there may be mentioned ink-ejecting methods using a thermal-type ink-jet print head or a piezoelectric-type ink-jet print head. In the present invention, there is preferably used the method in which the ink is ejected and printed by using a piezoelectric-type ink-jet print head.

The water absorption of the low-water absorbing printing medium used in the present invention as measured by contacting the printing medium with pure water for 100 milliseconds is not less than 0 g/m$^2$, preferably not less than 1.0 g/m$^2$ and more preferably not less than 2.0 g/m$^2$ from the viewpoint of promoting drying of the printed characters or images and improving rub fastness of the water-based ink, and is also not more than 10 g/m$^2$, preferably not more than 8.0 g/m$^2$, more preferably not more than 6.0 g/m$^2$ and even more preferably not more than 4.0 g/m$^2$ from the viewpoint of enhancing optical density and gloss of the printed characters or images. The aforementioned water absorption of the low-water absorbing printing medium may be measured using an automatic scanning absorptometer by the method described in Examples below.

As the low-water absorbing printing medium for ink-jet printing, from the viewpoint of improving rub fastness of the water-based ink, there is preferably used a coated paper or a synthetic resin film, and more preferably a synthetic resin film.

Examples of the coated paper include "OK Topcoat Plus" (basis weight: 104.7 g/m$^2$; 60° gloss: 49.0; water absorption as measured in a pure water contact time of 100 milliseconds (hereinafter defined in the same way): 4.9 g/m$^2$) available from Oji Paper Co., Ltd., a multi-color foam glossy coated paper (104.7 g/m$^2$; 60° gloss: 36.8; water absorption: 5.2 g/m$^2$) available from Oji Paper Co., Ltd., "UPM Finesse Gloss" (115 g/m$^2$; 60° gloss: 27.0; water absorption: 3.1 g/m$^2$) available from UPM, "UPM Finesse Matt" (115 g/m$^2$; 60° gloss: 5.6; water absorption: 4.4 g/m$^2$) available from UPM, "TerraPress Silk" (80 g/m$^2$; 60° gloss: 6.0; water absorption: 4.1 g/m$^2$) available from Stora Enso, and "LumiArt" (90 g/m$^2$; 60° gloss: 26.3) available from Stora Enso.

Examples of the synthetic resin film include a polyester film, a polyvinyl chloride film, a polypropylene film, a polyethylene film and a nylon film. These films may be subjected to surface treatments such as corona treatment, etc., if required.

Examples of the generally available synthetic resin films include "LUMIRROR T60" (polyethylene terephthalate; 60° gloss: 189.1; water absorption: 2.3 g/m$^2$) available from Toray Industries Inc., "PVC80B P" (polyvinyl chloride; 60° gloss: 58.8; water absorption: 1.4 g/m$^2$) available from Lintec Corporation, "KINATH KEE 70CA" (polyethylene) available from Lintec Corporation, "YUPO SG90 PAT1" (polypropylene) available from Lintec Corporation, "BONYL RX" (nylon) available from Kohjin Film & Chemicals Co., Ltd., and "TETRON U2" (white polyester film) available from Teijin DuPont Films Japan Ltd.

With respect to the aforementioned embodiments, the present invention further provides the following aspects relating to the process for producing the colored fine particle dispersion and the process for producing the water-based ink containing the colored fine particle dispersion.

<1> A process for producing a colored fine particle dispersion by subjecting a raw material monomer containing a crosslinkable monomer to emulsion polymerization in the presence of a pigment in which an amount of the crosslinkable monomer compounded in the raw material monomer is not less than 0.1% by mass and not more than 10% by mass, said process including the following steps 1 and 2:

Step 1: mixing and emulsifying the raw material monomer with a surfactant A and water to obtain a pre-emulsion; and
Step 2: while supplying the pre-emulsion obtained in the step 1 to a pigment pre-dispersion containing the pigment and water, subjecting the resulting mixture to emulsion polymerization to thereby obtain the colored fine particle dispersion.

<2> The process for producing a colored fine particle dispersion according to the aspect <1>, wherein the pigment is a pigment subjected to no hydrophilic treatment.

<3> The process for producing a colored fine particle dispersion according to the aspect <1> or <2>, wherein the crosslinkable monomer contains two or more polymerizable groups in a molecule thereof, and the polymerizable groups are in the form of a group containing a radical-polymerizable unsaturated double bond.

<4> The process for producing a colored fine particle dispersion according to any one of the aspects <1> to <3>, wherein the crosslinkable monomer is preferably a (meth)acrylate derived from a polyhydric alcohol, more preferably at least one monomer selected from the group consisting of a di(meth)acrylate and a tri(meth)acrylate which are derived from a polyhydric alcohol, even more preferably at least one monomer selected from the group consisting of diethylene glycol di(meth)acrylate, triethylene glycol di(meth)acrylate and trimethylolpropane tri(meth)acrylate, further even more preferably at least one monomer selected from the group consisting of diethylene glycol di(meth)acrylate and trimethylolpropane tri(meth)acrylate, and still further even more preferably trimethylolpropane tri(meth)acrylate.

<5> The process for producing a colored fine particle dispersion according to any one of the aspects <1> to <4>, wherein an amount of the crosslinkable monomer compounded in the raw material monomer is preferably not less than 0.3% by mass, more preferably not less than 0.5% by mass and even more preferably not less than 0.7% by mass, and is also preferably not more than 7.0% by mass, more preferably not more than 5.0% by mass, even more preferably not more than 3.0% by mass and further even more preferably not more than 2.0% by mass.

<6> The process for producing a colored fine particle dispersion according to any one of the aspects <1> to <5>, wherein in the case where the crosslinkable monomer contains two polymerizable groups in a molecule thereof, the amount of the crosslinkable monomer compounded in the raw material monomer is not less than 0.1% by mass, preferably not less than 0.5% by mass, more preferably not less than 1.0% by mass, even more preferably not less than 2.0% by mass and further even more preferably not less than 4.0% by mass, and is also not more than 10% by mass, preferably not more than 8.0% by mass and more preferably not more than 6.0% by mass.

<7> The process for producing a colored fine particle dispersion according to any one of the aspects <1> to <5>, wherein in the case where the crosslinkable monomer contains three or more polymerizable groups in a molecule thereof, preferably in the case where the crosslinkable monomer contains three polymerizable groups in a molecule thereof, the amount of the crosslinkable monomer compounded in the raw material monomer is not less than 0.1% by mass, preferably not less than 0.3% by mass, more preferably not less than 0.5% by mass and even more preferably not less than 0.7% by mass, and is also not more than 10% by mass, preferably not more than 7.0% by mass, more preferably not more than 5.0% by mass, even more preferably not more than 3.0% by mass and further even more preferably not more than 2.0% by mass.

<8> The process for producing a colored fine particle dispersion according to any one of the aspects <1> to <7>, wherein the raw material monomer further contains an acid group-containing monomer.

<9> The process for producing a colored fine particle dispersion according to the aspect <8>, wherein the acid group-containing monomer is a carboxy group-containing monomer, and the carboxy group-containing monomer is preferably at least one monomer selected from the group consisting of (meth)acrylic acid, maleic acid, itaconic acid, fumaric acid and crotonic acid, and more preferably (meth)acrylic acid.

<10> The process for producing a colored fine particle dispersion according to the aspect <8> or <9>, wherein an amount of the acid group-containing monomer compounded in the raw material monomer is preferably not less than 1.0% by mass, more preferably not less than 3.0% by mass and even more preferably not less than 4.0% by mass, and is also preferably not more than 20% by mass, more preferably not more than 15% by mass, even more preferably not more than 10% by mass and further even more preferably not more than 6.0% by mass.

<11> The process for producing a colored fine particle dispersion according to any one of the aspects <1> to <10>, wherein the raw material monomer further contains a hydrophobic monomer.

<12> The process for producing a colored fine particle dispersion according to the aspect <11>, wherein the hydrophobic monomer is preferably at least one monomer selected from the group consisting of a (meth)acrylate containing a hydrocarbon group derived from an aliphatic alcohol and an aromatic ring-containing hydrophobic monomer.

<13> The process for producing a colored fine particle dispersion according to the aspect <11> or <12>, wherein an amount of the hydrophobic monomer compounded in the raw material monomer is preferably not less than 80% by mass, more preferably not less than 85% by mass and even more preferably not less than 90% by mass, and is also preferably not more than 99% by mass, more preferably not more than 97% by mass and even more preferably not more than 95% by mass.

<14> The process for producing a colored fine particle dispersion according to any one of the aspects <1> to <13>, wherein the surfactant A is preferably at least one surfactant selected from the group consisting of an anionic surfactant and a nonionic surfactant.

<15> The process for producing a colored fine particle dispersion according to any one of the aspects <1> to <14>, wherein an amount of the surfactant A used in the step 1 is preferably not less than 0.05 part by mass, more preferably not less than 0.1 part by mass, even more preferably not less than 0.5 part by mass and further even more preferably not less than 1.0 part by mass, and is also preferably not more than 15 parts by mass, more preferably not more than 10 parts by mass and even more preferably not more than 5.0 parts by mass, on the basis of 100 parts by mass of the raw material monomer.

<16> The process for producing a colored fine particle dispersion according to any one of the aspects <1> to <15>, wherein the pigment pre-dispersion contains a surfactant B.

<17> The process for producing a colored fine particle dispersion according to the aspect <16>, wherein the pigment pre-dispersion is obtained by the following step 2-1 using the surfactant B:

Step 2-1: dispersing a mixed solution containing the pigment, the surfactant B and water to obtain the pigment pre-dispersion.

<18> The process for producing a colored fine particle dispersion according to the aspect <17>, wherein an amount of the surfactant B used in the step 2-1 is preferably not less than 1.0 part by mass, more preferably not less than 5.0 parts by mass and even more preferably not less than 8.0 parts by mass, and is also preferably not more than 50 parts by mass, more preferably not more than 30 parts by mass, even more preferably not more than 20 parts by mass and further even more preferably not more than 15 parts by mass, on the basis of 100 parts by mass of the pigment.

<19> The process for producing a colored fine particle dispersion according to any one of the aspects <16> to <18>, wherein the surfactant B contains a polymerizable surfactant, and the polymerizable surfactant is at least one surfactant selected from the group consisting of sulfosuccinic acid ester-based surfactants, alkylphenolether-based polymerizable group-containing surfactants and polyoxyethylene-based polymerizable group-containing surfactants.

<20> The process for producing a colored fine particle dispersion according to any one of the aspects <1> to <19>, wherein a content of the pigment in the pigment pre-dispersion is preferably not less than 5.0% by mass, more preferably not less than 10% by mass, even more preferably not less than 15% by mass and further even more preferably not less than 20% by mass, and is also preferably not more than 40% by mass, more preferably not more than 35% by mass and even more preferably not more than 30% by mass.

<21> The process for producing a colored fine particle dispersion according to any one of the aspects <16> to <20>, wherein in the case where the pigment pre-dispersion contains the surfactant B, a content of the surfactant B in the pigment pre-dispersion is preferably not less than 0.1% by mass, more preferably not less than 0.5% by mass and even more preferably not less than 1.0% by mass, and is also preferably not more than 30% by mass, more preferably not more than 20% by mass, even more preferably not more than 10% by mass and further even more preferably not more than 5.0% by mass.

<22> The process for producing a colored fine particle dispersion according to any one of the aspects <1> to <21>, wherein a solid content of the pigment pre-dispersion is preferably not less than 18% by mass, more preferably not less than 20% by mass and even more preferably not less than 25% by mass, and is also preferably not more than 60% by mass, more preferably not more than 40% by mass and even more preferably not more than 35% by mass.

<23> The process for producing a colored fine particle dispersion according to any one of the aspects <1> to <22>, wherein a mass ratio of the raw material monomer to the pigment (raw material monomer/pigment) upon the emulsion polymerization in the step 2 is preferably from 90/10 to 10/90, more preferably from 80/20 to 20/80, even more preferably from 70/30 to 30/70 and further even more preferably from 60/40 to 40/60

<24> The process for producing a colored fine particle dispersion according to any one of the aspects <1> to <23>, wherein a temperature of the pigment pre-dispersion upon initiation of supply of the pre-emulsion in the step 2 is preferably not lower than 60°C and more preferably not lower than 70°C, and is also preferably not higher than 100°C and more preferably not higher than 90°C.

<25> The process for producing a colored fine particle dispersion according to any one of the aspects <1> to <24>, wherein the step 1 includes:

Step 1a: mixing and emulsifying a raw material monomer (a) with the surfactant A and water to obtain a pre-emulsion (a), and

Step 1b: mixing and emulsifying a raw material monomer (b) with the surfactant A and water to obtain a pre-emulsion (b);

a content of a mass of the crosslinkable monomer in the raw material monomer (b) on the bass of a content of a mass of the crosslinkable monomer in the raw material monomer (a) is not more than 40% by mass; and the emulsion polymerization in the step 2 is conducted by multi-stage polymerization including an earlier stage in which the emulsion polymerization is conducted while supplying the pre-emulsion (a) and a later stage in which the emulsion polymerization is conducted while supplying the pre-emulsion (b) to obtain the colored fine particle dispersion.

<26> The process for producing a colored fine particle dispersion according to the aspect <25>, wherein the content of a mass of the crosslinkable monomer in the raw material monomer (b) on the bass of the content of a mass of the crosslinkable monomer in the raw material monomer (a) is preferably not more than 20% by mass, more preferably not more than 10% by mass and even more preferably not more than 5% by mass.

<27> The process for producing a colored fine particle dispersion according to any one of the aspects <1> to <24>, wherein the step 1 includes:

Step 1a: mixing and emulsifying a raw material monomer (a) containing the crosslinkable monomer with the surfactant A and water to obtain a pre-emulsion (a), and

Step 1b: mixing and emulsifying a raw material monomer (b) containing no crosslinkable monomer with the surfactant A and water to obtain a pre-emulsion (b); and

the emulsion polymerization in the step 2 is conducted by multi-stage polymerization including an earlier stage in which the emulsion polymerization is conducted while supplying the pre-emulsion (a) and a later stage in which the emulsion polymerization is conducted while supplying the pre-emulsion (b) to obtain the colored fine particle dispersion.

<28> The process for producing a colored fine particle dispersion according to any one of the aspects <25> to <27>, wherein the emulsion polymerization in the step 2 is conducted by two-stage polymerization including a first stage in which the emulsion polymerization is conducted while supplying the pre-emulsion (a) and a second stage in which the emulsion polymerization is conducted while supplying the pre-emulsion (b) to obtain the colored fine particle dispersion.

<29> The process for producing a colored fine particle dispersion according to any one of the aspects <25> to <28>, wherein an amount of the surfactant A contained in the pre-emulsion (a) or (b) is preferably not less than 0.05 part by mass, more preferably not less than 0.1 part by mass, even more preferably not less than 0.5 part by mass and further even more preferably not less than 1.0 part by mass, and is also preferably not more than 15 parts by mass, more preferably not more than 10 parts by mass, even more preferably not more than 8.0 parts by mass, further even more preferably not more than 6.0 parts by mass, still further even more preferably not more than 5.0 parts by mass and still further even more preferably not more than 4.0 parts by mass, on the basis of 100 parts by mass of the raw material monomer (a) or (b).

<30> The process for producing a colored fine particle dispersion according to any one of the aspects <25> to <29>, wherein a mass ratio of the raw material monomer except for the crosslinkable monomer in the pre-emulsion (a) to the raw material monomer except for the crosslinkable monomer in the pre-emulsion (b) [pre-emulsion (a)/pre-emulsion (b)] is preferably from 20/80 to 80/20, more preferably from 30/70 to 70/30 and even more preferably from 40/60 to 60/40.

<31> The process for producing a colored fine particle dispersion according to any one of the aspects <1> to <30>, wherein after completion of supply of the pre-emulsion in the step 2, the resulting dispersion is preferably further subjected to centrifugal separation treatment or filtration treatment, and more preferably subjected to both of the centrifugal separation treatment and filtration treatment.

<32> The process for producing a colored fine particle dispersion according to any one of the aspects <1> to <31>, wherein a content of the colored fine particles in the colored fine particle dispersion (solid content of the colored fine particle dispersion) is preferably not less than 10% by mass, more preferably not less than 20% by mass and even more preferably not less than 30% by mass, and is also preferably not more than 60% by mass, more preferably not more than 50% by mass and even more preferably not more than 40% by mass.

<33> The process for producing a colored fine particle dispersion according to any one of the aspects <1> to <32>, wherein a content of the pigment in the colored fine particle dispersion is preferably not less than 1.0% by mass, more preferably not less than 3.0% by mass, even more preferably not less than 5.0% by mass and further even more preferably not less than 7.0% by mass, and is also preferably not more than 40% by mass, more preferably not more than 30% by mass, even more preferably not more than 20% by mass and further even more preferably not more than 15% by mass.

<34> The process for producing a colored fine particle dispersion according to any one of the aspects <1> to <33>, wherein a content of the crosslinked polymer (polymer containing a crosslinked moiety) in the colored fine particle dispersion is preferably not less than 1.0% by mass, more preferably not less than 5.0% by mass, even more preferably not less than 10% by mass and further even more preferably not less than 15% by mass, and is also preferably not more than 40% by mass, more preferably not more than 35% by mass, even more preferably not more than 30% by mass and further even more preferably not more than 25% by mass.

<35> The process for producing a colored fine particle dispersion according to any one of the aspects <1> to <34>, wherein a mass ratio of the pigment to the crosslinked polymer (polymer containing a crosslinked moiety) [pigment/crosslinked polymer] in the colored fine particle dispersion is preferably not less than 0.1, more preferably not less than 0.2 and even more preferably not less than 0.3, and is also preferably not more than 4.0, more preferably not more than 3.0, even more preferably not more than 2.0, further even more preferably not more than 1.0 and still further even more preferably not more than 0.7.

<36> The process for producing a colored fine particle dispersion according to any one of the aspects <1> to <35>, wherein an average particle size of the colored fine particles in the colored fine particle dispersion as measured at 25°C is preferably not less than 10 nm, more preferably not less than 30 nm, even more preferably not less than 40 nm, further even more preferably not less than 50 nm, still further even more preferably not less than 60 nm, still further even more preferably not less than 75 nm, still further even more preferably not less than 80 nm and still further even more preferably not less than 100 nm, and is also preferably not more than 300 nm, more preferably not more than 250 nm, even more preferably not more than 200 nm, further even more preferably not more than 180 nm and still further even more preferably not more than 140 nm.

<37> A process for producing a water-based ink, including the step of mixing the colored fine particle dispersion that is produced by the process according to any one of the aspects <1> to <36>, and an organic solvent.

<38> The process for producing a water-based ink according to the aspect <37>, wherein the organic solvent contains preferably at least one compound selected from the group consisting of polyhydric alcohols and polyhydric alcohol alkyl ethers, more preferably contains those compounds including polyhydric alcohol alkyl ethers, and even more preferably is a combination of the polyhydric alcohol and the polyhydric alcohol alkyl ether.

<39> The process for producing a water-based ink according to the aspect <38>, wherein a content of the polyhydric alcohol alkyl ethers in the organic solvent is preferably not less than 10% by mass, more preferably not less than 20% by mass and even more preferably not less than 30% by mass, and is also preferably not more than 70% by mass, more preferably not more than 60% by mass and even more preferably not more than 50% by mass.

<40> A colored fine particle dispersion that is produced by the process according to any one of the aspects <1> to <36>.

<41> A use of the colored fine particle dispersion that is produced by the process according to any one of the aspects <1> to <36> as a colorant for a water-based ink for ink-jet printing.

EXAMPLES

In the following Production Examples, Examples and Comparative Examples, the "part(s)" and "%" indicate "part(s) by mass" and "% by mass", respectively, unless otherwise specified.

(1) Measurement of Average Particle Sizes of Particles Dispersed in Pigment Pre-Dispersion, Colored Fine Particle Dispersion and Water-Based Ink

The average particle size of the particles dispersed in the respective dispersions and ink was measured using a laser particle analyzing system "ELS-8000" (cumulant analysis) available from Otsuka Electronics Co., Ltd. The thus determined cumulant average particle size was regarded as the average particle size of the particles dispersed in the respective dispersions and ink. The measurement was conducted under the conditions including a temperature of 25°C, an angle between incident light and a detector of 90° and a cumulative number of 100 times, and a refractive index of water (1.333) was input to the analyzing system as a refractive index of the dispersing medium. In the measurement, the concentration of the dispersion to be measured was adjusted to $5 \times 10^{-3}$% by weight (in terms of a solid content of the dispersion).

(2) Measurement of Solid Contents of Pigment Pre-Dispersion and Colored Fine Particle Dispersion

Using an infrared moisture meter "FD-230" (tradename) available from Kett Electric Laboratory, 5 g of an aqueous dispersion to be measured was dried at a drying temperature of 150°C under a measuring mode 96 (monitoring time: 2.5 minutes/variation range: 0.05%) to measure a water content on a wet base (%) of the aqueous dispersion. The solid content of the aqueous dispersion was calculated according to the following formula:

$$\text{Solid Content (\%)} = 100 - \text{Water Content on Wet Base (\%) of Aqueous Dispersion}$$

(3) Measurement of Viscosity of Water-Based Ink

The viscosity of the water-based ink was measured at 32°C using an E-type viscometer "Model No.: TV-25" (using a standard cone rotor (1°34' x R24); rotating speed: 50 rpm) available from Toki Sangyo Co., Ltd. The data obtained in this measurement were used as data for the below-mentioned storage stability evaluation test.

(4) Measurement of Static Surface Tension of Water-Based Ink

A platinum plate was dipped in 5 g of the water-based ink adjusted to a temperature of 20°C and filled in a cylindrical polyethylene container (3.6 cm in diameter x 1.2 cm in depth), and the static surface tension of the water-based ink was measured using a surface tension meter "CBVP-Z" available from Kyowa Interface Science Co., Ltd., by Wilhelmy method.

(5) Measurement of pH Value of Water-Based Ink

The pH value of the water-based ink was measured at 25°C using a bench-top pH meter "F-71" available from Horiba Ltd., equipped with a pH electrode "6337-10D" available from Horiba Ltd.

(6) Water Absorption of Printing Medium

The water absorption of the printing medium as measured by contacting the printing medium with pure water for 100 milliseconds was determined as follows. That is, using an automatic scanning absorptometer "KM500win" available from Kumagai Riki Kogyo Co., Ltd., an amount of pure water transferred to the printing medium when allowing the printing medium to contact with pure water at 23°C under a relative humidity of 50% RH for 100 milliseconds was measured. The thus measured amount of pure water transferred to the printing medium was determined as the water absorption of the printing medium. The measuring conditions are as follows.

"Spiral Method"

    Contact time: 0.010 to 1.0 (sec)
    Pitch (mm): 7
    Length Per Sampling (degree): 86.29
    Start Radius (mm): 20
    End Radius (mm): 60
    Min Contact Time (ms): 10
    Max Contact Time (ms): 1000
    Sampling Pattern (1-50): 50
    Number of Sampling Points (>0): 19

"Square Head"

    Split Span (mm): 1
    Split Width (mm): 5

<Production of Colored Fine Particle Dispersions>

Examples 1-1 to 1-6 and Comparative Examples 1-1 and 1-2

(Step 1: Production of EC-1 to EC-6)

A glass container was charged with a vinyl-based monomer, a emulsifier for emulsion polymerization "LATEMUL E-118B" (tradename; sodium polyoxyethylene alkyl ether sulfate) available from Kao Corporation and ion-exchanged water, as shown in Table 1-1, and the contents of the glass container were stirred using a Teflon (registered trademark) stirring blade at 500 rpm for 30 minutes, thereby obtaining a pre-emulsion. At this time, in the case where the emulsion polymerization was conducted by two-stage polymerization, the pre-emulsions for a first stage and a second stage of the two-stage polymerization were respectively prepared.

(Step 2-1: Production of PD-1 to PD-3)

Separately, a 5 L polyethylene container was charged with a polymerizable surfactant "LATEMUL PD-104" (tradename; ammonium polyoxyalkylene alkenyl ether sulfate) available from Kao Corporation, ion-exchanged water, methyl ethyl ketone and C.I. Pigment Blue 15-3 (P.B. 15-3), C.I. Pigment Yellow 155 (P.Y. 155) or C.I. Pigment Red 122 (P.R. 122) as a pigment, as shown in Table 1-2, and the contents of the polyethylene container were subjected to dispersion treatment using "ROBOMICS" available from PRIMIX Corporation equipped with a homodisper at an operating speed of 4000 rpm for 2 hours while cooling in an ice bath at 0°C. Meanwhile, all of the pigments used above were in the form of a pigment subjected to no hydrophilic treatment.

Then, the obtained mixture was further subjected to dispersion treatment under a pressure of 150 MPa by passing through a Microfluidizer "Model No.: M-110EH-30XP" (tradename) available from Microfluidics Corporation 15 times. The resulting dispersion was concentrated under reduced pressure at 60°C using an evaporator by removing methyl ethyl ketone therefrom until reaching a desired solid content, thereby obtaining a pigment pre-dispersion (solid content: 30%). The average particle size of pigment particles contained in the thus obtained pigment pre-dispersion is shown in Table 1-2.

(Step 2: Production of ECC-1 to ECC-6, ECY-1 and ECM-1)

A 1 L separable flask was charged with a pigment pre-dispersion, an anionic azo-based polymerization initiator "V-501" (tradename; 4,4'-azobis(4-cyanovaleric acid)) available from Wako Pure Chemical Industries, Ltd., and ion-exchanged water, as shown in Table 1-3, and the contents of the flask were heated to 80°C in a hot water bath while stirring at 250 rpm. After the temperature of the dispersion in the flask reached 80°C, the pre-emulsion as shown in Table 1-3 was added dropwise thereinto over 2 hours. At this time, if the emulsion polymerization was conducted by two-stage polymerization, the pre-emulsion for the first stage was added dropwise over 1 hour, and then the pre-emulsion for the second stage was added dropwise over 1 hour.

After completion of the dropwise addition of the pre-emulsion(s), the resulting dispersion was aged at 80°C for 2 hours, and then cooled to room temperature (20°C). Nine hundred grams (900 g) of the dispersion obtained after the polymerization were charged into a 1,000 mL angle rotor, and subjected to centrifugal separation treatment using a high-speed cooling centrifuge "himac CR7" (tradename; temperature set: 20°C) available from Hitachi Koki Co., Ltd., at 3,660 rpm (centrifugal acceleration: 3,050 G) for 20 minutes, and then 810 g of a supernatant solution was sampled therefrom. Thereafter, the thus sampled supernatant solution was filtered through a 5 $\mu$m-mesh disposable membrane filter "Minisart" (filter pore size: 5 $\mu$m) available from Sartorius Inc., thereby obtaining respective colored fine particle dispersions. The properties of the thus obtained colored fine particle dispersions are shown in Table 1-3.

Comparative Example 1-3

(Step 2: Production of ECC-7)

After completion of supply of the pre-emulsion EC-2 to the pigment pre-dispersion PD-1 both used in Example 1-1, the resulting dispersion was heated to 80°C to subject the dispersion to polymerization reaction. More specifically, the following procedure was conducted.

That is, a 1 L separable flask was charged with a pigment pre-dispersion, an anionic azo-based polymerization initiator "V-501" and ion-exchanged water, as shown in Table 1-3, and while stirring the contents of the flask at 250 rpm, the pre-emulsion was added dropwise thereinto at room temperature (20°C) over 2 hours.

After completion of the dropwise addition of the pre-emulsion, the resulting mixed solution was heated to 80°C. After reaching 80°C, the mixed solution was subjected as such to polymerization for 4 hours, and then cooled to room temperature (20°C). Nine hundred grams (900 g) of the resulting dispersion obtained after the polymerization were charged into a 1,000 mL angle rotor, and subjected to centrifugal separation treatment using a high-speed cooling centrifuge "himac CR7" (tradename; temperature set: 20°C) available from Hitachi Koki Co., Ltd., at 3,660 rpm (centrifugal acceleration: 3,050 G) for 20 minutes, and then 810 g of a supernatant solution was sampled therefrom. Thereafter, it was attempted to filter the thus sampled supernatant solution through a 5 $\mu$m-mesh disposable membrane filter "Minisart" (filter pore size: 5 $\mu$m) available from Sartorius Inc. However, filtration of the supernatant solution was not possible at all. For this reason, in the following evaluation procedure, the supernatant solution obtained after the centrifugal separation treatment was directly used as the colored fine particle dispersion without being subjected to filtration treatment, and compounded as such in the water-based ink. The properties of the thus obtained colored fine particle dispersion are shown in Table 1-3.

TABLE 1-1-1: Pre-emulsion charged

| No. of pre-emulsion | | | EC-1 | EC-2 | EC-3 | EC-4 | EC-5 | EC-6 |
|---|---|---|---|---|---|---|---|---|
| Charged composition of pre-emulsion for supply in single stage or pre-emulsion for supply in first stage[*1] | Methacrylic acid | part(s) by mass (% by mass) | 11.67 (5.0) | 11.67 (5.0) | 5.84 (2.5) | 5.84 (2.5) | 5.84 (2.5) | 11.67 (5.0) |
| | Methyl methacrylate | part(s) by mass (% by mass) | 163.33 (70.0) | 161.0 (69.0) | 80.5 (34.5) | 75.83 (32.5) | 80.5 (34.5) | 140.0 (60.0) |
| | 2-Ethylhexyl acrylate | part(s) by mass (% by mass) | 58.33 (25.0) | 58.33 (25.0) | 29.17 (12.5) | 29.17 (12.5) | 29.17 (12.5) | 46.66 (20.0) |
| | Trimethylolpropane trimethacrylate | part(s) by mass (% by mass) | | 2.33 (1.0) | | | 2.33 (1.0) | 35.00 (15.0) |
| | Diethylene glycol dimethacrylate | part(s) by (% by mass) | | | | 11.68 (5.0) | | |
| | "LATEMUL E-118B"[*2] | part(s) by mass | 26.92 | 26.92 | 13.46 | 13.46 | 13.46 | 26.92 |
| | Ion-exchanged water | part(s) by mass | 108.41 | 108.41 | 54.21 | 54.21 | 54.21 | 108.41 |

**EP 3 470 479 A1**

TABLE 1-1-2

| No. of pre-emulsion | | | EC-1 | EC-2 | EC-3 | EC-4 | EC-5 | EC-6 |
|---|---|---|---|---|---|---|---|---|
| Charged composition of pre-emulsion for supply in second stage[*1] | Methacrylic acid | part(s) by mass (% by mass) | | | 5.84 (2.5) | 5.84 (2.5) | 5.84 (2.5) | |
| | Methyl methacrylate | part(s) by mass (% by mass) | | | 80.5 (34.5) | 75.83 (32.5) | 80.5 (34.5) | |
| | 2- Ethylhexyl acrylate | part(s) by mass (% by mass) | | | 29.17 (12.5) | 29.17 (12.5) | 29.17 (12.5) | |
| | Trimethylolpropane trimethacrylate | part(s) by mass (% by mass) | | | 2.33 (1.0) | | | |
| | Diethylene glycol dimethacrylate | part(s) by mass (% by mass) | | | | | | |
| | "LATEMUL E-118B"[*2] | part(s) by mass | | | 13.46 | 13.46 | 13.46 | |
| | Ion -exchanged water | part(s) by mass | | | 54.21 | 54.21 | 54.21 | |

Note The respective notations with asterisks shown in Table 1 are as follows.
*1: The numeral values in parentheses indicate ratios (% by mass) of respective monomers in a monomer mixture (raw material monomer).
*2: "LATEMUL E-118B" was in the form of an aqueous solution having a solid content of 26% by mass.

TABLE 1-2: Pigment pre-dispersion charged and evaluation results

| No. of pigment pre-dispersion | | | PD-1 | PD-2 | PD-3 |
|---|---|---|---|---|---|
| Charged composition of pigment pre-dispersion | "LATEMUL PD-104"[*3] | part(s) by mass | 444.0 | 444.0 | 444.0 |
| | Ion-exchanged water | part(s) by mass | 1963.0 | 1963.0 | 1963.0 |
| | Methyl ethyl ketone | part(s) by mass | 348.0 | 348.0 | 348.0 |
| | Pigment (P.B. 15-3) | part(s) by mass | 800.0 | - | - |
| | Pigment (P.Y. 155) | part(s) by mass | - | 800.0 | - |
| | Pigment (P.R. 122) | part(s) by mass | - | - | 800.0 |
| Properties of pigment pre-dispersion | Average particle size | nm | 97.5 | 165.0 | 112.0 |
| | Solid content | % by mass | 30.0 | 30.0 | 30.0 |

Note *3: "LATEMUL PD-104" was in the form of an aqueous solution having a solid content of 20% by mass.

TABLE 1-3-1: Production of colored fine particle dispersion and evaluation results

| | | | Comparative Example 1-1 | Example 1-1 | Example 1-2 | Example 1-3 | Example 1-4 |
|---|---|---|---|---|---|---|---|
| No. of colored fine particle dispersion | | | ECC-1 | ECC-2 | ECC-3 | ECC-4 | ECC-5 |
| Emulsion polymerization | | | Single-stage | Single-stage | Multi-stage | Multi-stage | Multi-stage |
| Pre-emulsion | | No. | EC-1 | EC-2 | EC-3 | EC-4 | EC-5 |
| Charged composition | Pigment pre-dispersion | No. | PD-1 | PD-1 | PD-1 | PD-1 | PD-1 |
| | | part(s) by mass | 777.8 | 777.8 | 777.8 | 777.8 | 777.8 |
| | Polymerization initiator ("V-501") | part(s) by mass | 1.17 | 1.17 | 1.17 | 1.17 | 1.17 |
| | Ion-exchanged water | part(s) by mass | 38.8 | 38.8 | 38.8 | 38.8 | 38.8 |
| Polymerization method[*4] | | | A | A | A | A | A |
| Properties of colored fine particle dispersion obtained | Filterability of filter [*5] | g | 500 g < | 500 g < | 500 g < | 500 g < | 500 g < |
| | Average particle size | nm | 121.0 | 119.0 | 122.0 | 121.2 | 117.0 |
| | Solid content | % by mass | 35.8 | 35.8 | 35.8 | 35.8 | 35.8 |
| | Content of pigment | % by mass | 10.5 | 10.5 | 10.5 | 10.5 | 10.5 |

TABLE 1-3-2

| | | | Comparative Example 1-2 | Example 1-5 | Example 1-6 | Comparative Example 1-3 |
|---|---|---|---|---|---|---|
| No. of colored fine particle dispersion | | | ECC-6 | ECY-1 | ECM-1 | ECC-7 |
| Emulsion polymerization | | | Single-stage | Multi-stage | Multi-stage | Single-stage |
| Pre-emulsion | | No. | EC-6 | EC-5 | EC-5 | EC-2 |
| Charged composition | Pigment pre-dispersion | No. | PD-1 | PD-2 | PD-3 | PD-1 |
| | | part(s) by mass | 777.8 | 777.8 | 777.8 | 777.8 |
| | Polymerization initiator ("V-501") | part(s) by mass | 1.17 | 1.17 | 1.17 | 1.17 |
| | Ion-exchanged water | part(s) by mass | 38.8 | 38.8 | 38.8 | 38.8 |
| Polymerization method[*4] | | | A | A | A | B |

(continued)

| | | | Comparative Example 1-2 | Example 1-5 | Example 1-6 | Comparative Example 1-3 |
|---|---|---|---|---|---|---|
| Properties of colored fine particle dispersion obtained | Filterability of filter(*5) | g | 352 g | 500 g < | 500 g < | 0 g |
| | Average particle size | nm | 119.0 | 177.0 | 125.0 | 136.5 |
| | Solid content | % by mass | 35.8 | 35.8 | 35.8 | 35.8 |
| | Content of pigment | % by mass | 10.5 | 10.5 | 10.5 | 10.5 |

Note *4: In the polymerization method A, the charged composition was heated to 80°C, and then while supplying the pre-emulsion thereto, the resulting mixture was subjected to polymerization. Whereas, in the polymerization method B, after supplying the pre-emulsion to the charged composition, the resulting mixture was heated to 80°C to conduct polymerization thereof.
*5: Amount of the dispersion passed per one 5 $\mu$m-mesh disposable filter available from Sartorius Inc.

In Examples 1-1 to 1-6, the amounts of the dispersions passed per one 5 $\mu$m-mesh filter (cellulose acetate membrane) available from Sartorius Inc., all were more than 500 g. However, in Comparative Examples 1-2 in which the amount of the crosslinkable monomer compounded in the raw material monomer was more than 10% by mass, the amount of the dispersion passed per one 5 $\mu$m-mesh filter was smaller than those amounts of the dispersions passed in Examples 1-1 to 1-6. Furthermore, in Comparative Examples 1-3 in which the emulsion polymerization was conducted after completion of supply of the pre-emulsion to the pigment pre-dispersion, it was not possible at all to subject the dispersion to filtration treatment.

<Production of Water-Based Ink>

Examples 2-1 to 2-6 and Comparative Examples 2-1 to 2-3

A glass container was charged with a colored fine particle dispersion, a 1N NaOH aqueous solution as a neutralizing agent, and ion-exchanged water, as shown in Table 2, and the contents of the glass container were stirred for 10 minutes using a magnetic stirrer, thereby obtaining a mixture A.
Separately, a glass container was charged with propylene glycol, diethylene glycol monoisobutyl ether, and a polyether-modified silicone surfactant "KF-6011" available from Shin-Etsu Chemical Co., Ltd., as shown in Table 2, and the contents of the glass container were stirred for 10 minutes using a magnetic stirrer, thereby obtaining a mixture B.
Next, while stirring the mixture A, the mixture B was added thereto, and the resulting mixture was continuously stirred as such for 1 hour. Thereafter, the mixture was subjected to filtration treatment through a 5 $\mu$m-mesh disposable membrane filter "Minisart" available from Sartorius Inc., thereby obtaining respective water-based inks.

<Evaluation of Water-Based Ink>

Using the water-based inks prepared above, ink-jet printed materials were produced as shown in the following item (1), and the rub fastness thereof was evaluated by the method described in the following item (2). In addition, the water-based inks prepared above were evaluated for storage stability thereof by the method described in the following item (3). The results are shown in Table 2.

(1) Production of Ink-Jet Printed Materials

The respective water-based inks as shown in Table 2 were loaded to a print evaluation apparatus available from Trytech Co., Ltd., equipped with an ink-jet print head "KJ4B-HD06MHG-STDV" of a piezoelectric type available from Kyocera Corporation under the environmental conditions of a temperature of 25±1°C and a relative humidity of 30±5%. The operating conditions of the print evaluation apparatus were set to a head voltage of 26 V, a frequency of 20 kHz, an ejected ink droplet amount of 7 pL, a head temperature of 32°C, a resolution of 600 dpi, a number of ink shots for flashing before being ejected, of 200 shots and a negative pressure of -4.0 kPa. A polyester film "LUMIRROR

T60" (thickness: 75 μm; water absorption: 2.3 g/m$^2$) as a low-water absorbing printing medium available from Toray Industries Inc., was fixed on a transportation table under reduced pressure such that the longitudinal direction of the printing medium was aligned with a transporting direction thereof. A printing command was transmitted to the aforementioned print evaluation apparatus to print images with Duty 100% on the printing medium. After completion of the printing, the resulting printed materials were heated and dried on a hot plate at 60°C for 10 minutes.

(2) Evaluation of Rub Fastness Test

The above-obtained printed material was subjected to a rub fastness test in which the printed material was rubbed with a cotton "BEMCOT M-3" available from Asahi Kasei Corp., as a friction material using "Sutherland-type Ink Rub Tester AB-201" available from Tester Sangyo Co., Ltd., under a load of 900 g 10 times (by reciprocating motions). The rubbed printed material was visually observed to evaluate rub fastness thereof according to the following ratings.

[Evaluation Ratings]

A: No flaws owing to the rubbing were visually observed, and therefore rub fastness of the printed material was very good.
A-: Flaws owing to the rubbing were visually observed, but there was present no significant problem concerning rub fastness of the printed material.
B: Flaws owing to the rubbing were visually observed, and a part of the surface of the film was exposed, and therefore there was present some problem concerning rub fastness of the printed material.
C: Exposure of an entire surface portion of the film (i.e., a whole surface of the film) was caused, and therefore there was present significant problem concerning rub fastness of the printed material.

(3) Evaluation of Storage Stability

The water-based ink prepared above was filled in a closed container and subjected to storage test in a thermostatic chamber at 70°C. After the elapse of one week from initiation of the storage test, the ink was taken out from the container and measured with respect to viscosity thereof (using an E-type viscometer) to observe the change in viscosity of the ink from an initial stage of the storage test. The rate of change in viscosity of the water-based ink was calculated according to the following formula (round down to the nearest decimal) to evaluate storage stability of the water-based ink according to the following evaluation ratings. The results are shown in Table 2.

[Evaluation Ratings]

$$\text{Rate (\%) of Change in Viscosity} = [100 - [(\text{viscosity after storage})/(\text{viscosity before storage})] \times 100]$$

A: Absolute value of the rate of change in viscosity of the ink after being stored at 70°C for one week was less than 5%.
A-: Absolute value of the rate of change in viscosity of the ink after being stored at 70°C for one week was not less than 5% and less than 10%.
B: Absolute value of the rate of change in viscosity of the ink after being stored at 70°C for one week was not less than 10% and less than 20%.
C: Absolute value of the rate of change in viscosity of the ink after being stored at 70°C for one week was not less than 20%, or the ink had no flowability so that the measurement of the viscosity thereof was no longer possible.

TABLE 2-1: Production of water-based ink and evaluation results

| | | | Comparative Example 2-1 | Example 2-1 | Example 2-2 | Example 2-3 | Example 2-4 |
|---|---|---|---|---|---|---|---|
| Mixed solution A | Colored fine particle dispersion | No. | ECC-1 | ECC-2 | ECC-3 | ECC-4 | ECC-5 |
| | | part(s) by mass | 14.25 | 14.25 | 14.25 | 14.25 | 14.25 |
| | 1N NaOH aqueous solution | part(s) by mass | 0.45 | 0.45 | 0.45 | 0.45 | 0.45 |
| | Ion-exchanged water | part(s) by mass | 17.55 | 17.55 | 17.55 | 17.55 | 17.55 |
| Mixed solution B | Propylene glycol | part(s) by mass | 10.00 | 10.00 | 10.00 | 10.00 | 10.00 |
| | Diethylene glycol monoisobutyl ether | part(s) by mass | 7.50 | 7.50 | 7.50 | 7.50 | 7.50 |
| | "KF-6011"[*1] | part(s) by mass | 0.25 | 0.25 | 0.25 | 0.25 | 0.25 |
| Water-based ink | Average particle size | nm | 128.0 | 122.0 | 125.0 | 122.0 | 123.0 |
| | Viscosity at 32°C | mPa•s | 8.45 | 8.56 | 8.44 | 8.25 | 8.39 |
| | Static surface tension | mN/m | 29.2 | 29.4 | 29.1 | 29.0 | 29.2 |
| | pH | - | 8.21 | 7.99 | 8.11 | 8.07 | 8.05 |
| | Storage stability | - | B | A | A | A | A |
| Printed materials | Rub fastness | - | A | A- | A- | A | A |

TABLE 2-2

| | | | Comparative Example 2-2 | Example 2-5 | Example 2-6 | Comparative Example 2-3 |
|---|---|---|---|---|---|---|
| Mixed solution A | Colored fine particle dispersion | No. | ECC-6 | ECY-1 | ECM-1 | ECC-7 |
| | | part(s) by mass | 14.25 | 14.25 | 14.25 | 14.25 |
| | 1N NaOH aqueous solution | part(s) by mass | 0.45 | 0.45 | 0.45 | 0.45 |
| | Ion-exchanged water | part(s) by mass | 17.55 | 17.55 | 17.55 | 17.55 |
| Mixed solution B | Propylene glycol | part(s) by mass | 10.00 | 10.00 | 10.00 | 10.00 |
| | Diethylene glycol monoisobutyl ether | part(s) by mass | 7.50 | 7.50 | 7.50 | 7.50 |
| | "KF-6011"[*1] | part(s) by mass | 0.25 | 0.25 | 0.25 | 0.25 |

(continued)

| | | | Comparative Example 2-2 | Example 2-5 | Example 2-6 | Comparative Example 2-3 |
|---|---|---|---|---|---|---|
| Water-based ink | Average particle size | nm | 121.0 | 180.0 | 129.0 | 139.0 |
| | Viscosity at 32°C | mPa•s | 8.21 | 8.99 | 7.99 | 6.88 |
| | Static surface tension | mN/m | 29.0 | 29.1 | 28.8 | 27.9 |
| | pH | - | 8.55 | 7.89 | 7.99 | 8.11 |
| | Storage stability | - | A | A | A | C |
| Printed materials | Rub fastness | - | C | A | A | B |
| Note 1*: Polyether-modified silicone "KF-6011" available from Shin-Etsu Chemical Co., Ltd. | | | | | | |

It was confirmed that the water-based inks obtained in Examples 2-1 to 2-6 were excellent in storage stability and rub fastness as compared to the water-based inks obtained in Comparative Examples 2-1 to 2-3. In addition, in Examples 2-3, 2-4, 2-5 and 2-6 in which after supplying the pre-emulsion (a) containing the crosslinkable monomer in the first stage, the pre-emulsion (b) containing no crosslinkable monomer was supplied in the second stage, the resulting water-based inks were excellent in both of storage stability and rub fastness as compared to the water-based inks obtained in the other Examples. The reason therefor is considered to be that in the first stage, the emulsion polymerization was allowed to proceed in association with the crosslinking reaction in which an inner portion of the respective colored fine particles was preferentially subjected to crosslinking reaction, so that swelling of the colored fine particles was suppressed to thereby improve storage stability of the resulting ink. Furthermore, it is also considered that in the second stage, the emulsion polymerization was allowed to proceed substantially without subjecting an outer shell portion of the respective colored fine particles to crosslinking reaction, so that the resulting ink was improved in film-forming properties and exhibited excellent rub fastness.

**Claims**

1. A process for producing a colored fine particle dispersion by subjecting a raw material monomer comprising a crosslinkable monomer to emulsion polymerization in the presence of a pigment in which an amount of the crosslinkable monomer compounded in the raw material monomer is not less than 0.1% by mass and not more than 10% by mass, said process comprising the following steps 1 and 2:

   Step 1: mixing and emulsifying the raw material monomer with a surfactant A and water to obtain a pre-emulsion; and
   Step 2: while supplying the pre-emulsion obtained in the step 1 to a pigment pre-dispersion comprising the pigment and water, subjecting the resulting mixture to emulsion polymerization to thereby obtain the colored fine particle dispersion.

2. The process for producing a colored fine particle dispersion according to claim 1, wherein the crosslinkable monomer comprises two or more polymerizable groups in a molecule thereof, and the polymerizable groups are in the form of a group comprising a radical-polymerizable unsaturated double bond.

3. The process for producing a colored fine particle dispersion according to claim 1 or 2, wherein the crosslinkable monomer is a (meth)acrylate derived from a polyhydric alcohol.

4. The process for producing a colored fine particle dispersion according to any one of claims 1 to 3, wherein the raw material monomer further comprises at least one monomer selected from the group consisting of acrylic acid and methacrylic acid.

5. The process for producing a colored fine particle dispersion according to any one of claims 1 to 4, wherein the pigment pre-dispersion comprises a surfactant B.

6. The process for producing a colored fine particle dispersion according to claim 5, wherein the pigment pre-dispersion is obtained by the following step 2-1:

   Step 2-1: dispersing a mixed solution comprising the pigment, the surfactant B and water to obtain the pigment pre-dispersion.

7. The process for producing a colored fine particle dispersion according to claim 5 or 6, wherein the surfactant B comprises a polymerizable surfactant.

8. The process for producing a colored fine particle dispersion according to any one of claims 1 to 7, wherein the pigment is a pigment subjected to no hydrophilic treatment.

9. The process for producing a colored fine particle dispersion according to any one of claims 1 to 8, wherein a temperature of the pigment pre-dispersion upon initiation of supply of the pre-emulsion in the step 2 is not lower than 60°C and not higher than 100°C.

10. The process for producing a colored fine particle dispersion according to any one of claims 1 to 9, wherein the step 1 comprises the following steps 1a and 1b:

    Step 1a: mixing and emulsifying a raw material monomer (a) with the surfactant A and water to obtain a pre-emulsion (a); and
    Step 1b: mixing and emulsifying a raw material monomer (b) with the surfactant A and water to obtain a pre-emulsion (b),

    in which a content of a mass of the crosslinkable monomer in the raw material monomer (b) on the basis of a content of a mass of the crosslinkable monomer in the raw material monomer (a) is not more than 40% by mass; and
    the emulsion polymerization in the step 2 is conducted by multi-stage polymerization comprising an earlier stage in which the emulsion polymerization is conducted while supplying the pre-emulsion (a) and a later stage in which the emulsion polymerization is conducted while supplying the pre-emulsion (b) to obtain the colored fine particle dispersion.

11. The process for producing a colored fine particle dispersion according to claim 10, wherein the emulsion polymerization in the step 2 is conducted by two-stage polymerization comprising a first stage in which the emulsion polymerization is conducted while supplying the pre-emulsion (a) and a second stage in which the emulsion polymerization is conducted while supplying the pre-emulsion (b) to obtain the colored fine particle dispersion.

12. A colored fine particle dispersion that is produced by the process according to any one of claims 1 to 11.

13. A process for producing a water-based ink, comprising the step of mixing the colored fine particle dispersion that is produced by the process according to any one of claims 1 to 11, and an organic solvent.

14. The process for producing a water-based ink according to claim 13, wherein the organic solvent comprises a polyhydric alcohol alkyl ether.

15. A use of the colored fine particle dispersion that is produced by the process according to any one of claims 1 to 11 as a colorant for a water-based ink for ink-jet printing.

<table>
<tr><td colspan="2"><b>INTERNATIONAL SEARCH REPORT</b></td><td>International application No.<br>PCT/JP2017/021509</td></tr>
</table>

**A. CLASSIFICATION OF SUBJECT MATTER**
*C09D17/00*(2006.01)i, *C09C3/10*(2006.01)i, *C09D11/322*(2014.01)i

According to International Patent Classification (IPC) or to both national classification and IPC

**B. FIELDS SEARCHED**

Minimum documentation searched (classification system followed by classification symbols)
C09D17/00, C09C3/10, C09D11/322

Documentation searched other than minimum documentation to the extent that such documents are included in the fields searched
Jitsuyo Shinan Koho          1922-1996   Jitsuyo Shinan Toroku Koho   1996-2017
Kokai Jitsuyo Shinan Koho    1971-2017   Toroku Jitsuyo Shinan Koho   1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2002-348521 A  (Eastman Kodak Co.),<br>04 December 2002 (04.12.2002),<br>claims; paragraphs [0001], [0025], [0029],<br>[0035], [0039] to [0040]; examples<br>& US 2002/0183444 A1<br>claims; paragraphs [0005], [0042], [0045] to<br>[0046], [0050] to [0051]; examples<br>& EP 1245589 A1 | 1-9,12-15<br>10-11 |

☒ Further documents are listed in the continuation of Box C.          ☐ See patent family annex.

| | |
|---|---|
| * Special categories of cited documents:<br>"A" document defining the general state of the art which is not considered    to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>03 July 2017 (03.07.17) | Date of mailing of the international search report<br>18 July 2017 (18.07.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

<table>
<tr><td colspan="4" align="center">**INTERNATIONAL SEARCH REPORT**</td><td>International application No.<br>PCT/JP2017/021509</td></tr>
</table>

C (Continuation).    DOCUMENTS CONSIDERED TO BE RELEVANT

| Category* | Citation of document, with indication, where appropriate, of the relevant passages | Relevant to claim No. |
|---|---|---|
| X<br>A | JP 2002-363470 A  (Eastman Kodak Co.),<br>18 December 2002 (18.12.2002),<br>claims; paragraphs [0001], [0028], [0032],<br>[0038], [0040] to [0041]; examples<br>& US 2003/0027892 A1<br>claims; paragraphs [0002], [0034], [0037],<br>[0038], [0040] to [0041]; examples<br>& US 2002/0193464 A1    & US 2003/0199614 A1<br>& US 2003/0203988 A1    & EP 1245653 A2 | 1-9,12-15<br>10-11 |
| X<br>A | JP 2002-371105 A  (Eastman Kodak Co.),<br>26 December 2002 (26.12.2002),<br>claims; paragraphs [0001], [0026], [0030],<br>[0036], [0039] to [0040]; examples<br>& US 2002/0193514 A1<br>claims; paragraphs [0002], [0035], [0039] to<br>[0040], [0043] to [0044]; examples<br>& US 2004/0127639 A1    & EP 1245588 A1 | 1-9,12-15<br>10-11 |
| A | JP 2011-503321 A  (Hewlett-Packard Development<br>Co., L.P.),<br>27 January 2011 (27.01.2011),<br>claims<br>& US 2010/0256260 A1<br>claims<br>& WO 2009/064278 A1    & EP 2212387 A1<br>& CN 101861366 A        & TW 200934831 A | 1-15 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015048466 A
- JP 2002347338 A
- JP 2005097476 A